(19) Europäisches Patentamt
European Patent Office
Office européen des brevets

(11) EP 3 912 907 B1

## (12) FASCICULE DE BREVET EUROPEEN

(45) Date de publication et mention
de la délivrance du brevet:
**27.08.2025 Bulletin 2025/35**

(21) Numéro de dépôt: **21164801.9**

(22) Date de dépôt: **25.03.2021**

(51) Classification Internationale des Brevets (IPC):
***B64C 27/00*** *(2006.01)*

(52) Classification Coopérative des Brevets (CPC):
**B64C 27/008**

(54) **PROCEDE ET DISPOSITIF DE DETERMINATION D'UN ETAT D'UN ROTOR D'UN GIRAVION**

VERFAHREN UND VORRICHTUNG ZUR BESTIMMUNG EINES ZUSTANDS EINES ROTORS EINES DREHFLÜGELFLUGZEUGS

METHOD AND DEVICE FOR DETERMINING A STATE OF A ROTOR OF A ROTORCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.05.2020 FR 2005323**

(43) Date de publication de la demande:
**24.11.2021 Bulletin 2021/47**

(73) Titulaire: **Airbus Helicopters
13725 Marignane Cedex (FR)**

(72) Inventeur: **PETILLON, Jean-Paul
30120 LE VIGAN (FR)**

(74) Mandataire: **GPI Brevets
1330, rue Guillibert de la Lauzière
EuroParc de Pichaury
Bât B2
13856 Aix en Provence Cedex 3 (FR)**

(56) Documents cités:
**EP-A1- 3 025 958       EP-A1- 3 201 084
EP-A2- 2 433 866       EP-B1- 3 201 084
WO-A1-2018/081802       FR-A1- 2 961 306
US-A1- 2014 145 025       US-A1- 2015 210 382**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se situe dans le domaine des installations de pilotage équipant les giravions.

La présente invention concerne un procédé de détermination d'un état d'un rotor d'un giravion, cet état comportant notamment les pas cycliques longitudinal et latéral d'une pale de ce rotor par rapport au plan du disque de ce rotor, ainsi que l'angle du cône formé par les pales de ce rotor. La présente invention concerne également un dispositif de détermination d'un tel état d'un rotor. Ce procédé et ce dispositif se basent sur l'exploitation des oscillations sinusoïdales, mesurées par un gyromètre, du pas des pales du rotor du giravion.

Un giravion comporte généralement au moins un rotor de sustentation, dit classiquement « rotor principal », positionné au-dessus d'un fuselage du giravion et éventuellement un rotor anticouple et de contrôle des mouvements en lacet du giravion, situé par exemple à l'extrémité arrière d'une poutre de queue du giravion.

Le rotor principal comporte un mât, un moyeu et des pales. Le mât est solidaire du moyeu et entraîne en rotation, autour d'un axe du mât, le moyeu ainsi que les pales. Chaque pale est également mobile en rotation autour d'un ou de plusieurs axes d'articulation, à savoir un axe de pas, un axe de battement et un axe de traînée.

Un repère orthonormé est usuellement défini par rapport au fuselage du giravion par trois axes particuliers : un axe longitudinal orienté de l'arrière du giravion vers l'avant du giravion, un axe normal orienté du haut vers le bas perpendiculairement à l'axe longitudinal et un axe latéral orienté de la gauche vers la droite perpendiculairement aux axes longitudinal et normal. Ces axes définissent ainsi un repère lié au fuselage, usuellement nommé « repère fuselage », ou « body frame » en langue anglaise.

Les axes longitudinal et latéral sont généralement choisis de telle manière que le plan qu'ils forment soit sensiblement horizontal à la vitesse de croisière moyenne du giravion. Les axes longitudinal et normal forment quant à eux un plan de symétrie du fuselage de l'aéronef.

On définit la composante cyclique du pas d'une pale d'un rotor en tant qu'écart à la moyenne dudit pas sur une révolution complète de ladite pale. Ledit écart à la moyenne est un signal sensiblement sinusoïdal à la fréquence de rotation du rotor, de la forme $\theta_1.\sin(\psi + \varphi)$ où $\theta_1$ est l'amplitude du pas cyclique, $\psi$ est l'azimut de la pale, et $\varphi$ est la phase du pas cyclique. Cette phase dépend du choix de l'origine des azimuts. Si on définit comme origine des azimuts l'orientation de la pale quand elle passe dans le plan de symétrie du fuselage avec son extrémité libre orientée vers l'arrière, alors la composante longitudinale du pas cyclique est l'amplitude de la composante en sinus, et la composante latérale l'amplitude de la composante en cosinus :

$$\theta_1 . \sin(\psi + \varphi) = \theta_{1S}.\sin(\psi) + \theta_{1C}.\cos(\psi),$$

où $\theta_{1S}$ est le pas cyclique longitudinal et $\theta_{1C}$ est le pas cyclique latéral.

En outre, un plan dit « plan du moyeu » est perpendiculaire à l'axe du mât d'un rotor et est désigné par l'acronyme HP désignant en langue anglaise « Hub Plane ». De plus, au cours de leur rotation, les extrémités libres des pales du rotor du giravion décrivent des trajectoires sensiblement planes, et sensiblement identiques pour l'ensemble des pales du rotor. Le plan desdites trajectoires est nommé « plan du disque » et usuellement désigné par l'acronyme TPP, signifiant en langue anglaise « Tip Path Plane ».

L'état d'un rotor d'un giravion peut comporter notamment l'angle de battement moyen $\beta_0$ et les inclinaisons longitudinale $\beta_{1C}$ et latérale $\beta_{1S}$ du plan du disque de ce rotor.

Il est à noter que le pas collectif $\theta_0$ d'une pale d'un rotor est invariant au changement de plan de référence, notamment entre le plan du disque TPP et le plan moyeu HP. A contrario, les pas cycliques latéral $\theta_{1C}$ et longitudinal $\theta_{1S}$ de la pale du rotor dépendent du plan de référence. Les pas cycliques latéral $\theta_{1C}$ et longitudinal $\theta_{1S}$ de la pale sont notamment différents selon qu'ils sont exprimés par rapport au plan du disque TPP ou bien par rapport au plan moyeu HP.

Notamment, des mesures réalisées sur la chaîne de commande des pas cycliques latéral $\theta_{1C}$ et longitudinal $\theta_{1S}$ fournissent un angle des pales du rotor par rapport au plan moyeu HP.

S'agissant de l'art antérieur en matière de mesure d'un état d'un rotor, on connait le document US 9758258 qui décrit un système de suivi de la position et des mouvements des pales d'un rotor principal d'un giravion par l'intermédiaire d'une part d'un premier capteur positionné sur la pale, et d'autre part d'un second capteur, dit de référence, positionné sur le moyeu du rotor principal du giravion. Ces deux capteurs, positionnés sur la pale et sur le moyeu, peuvent comporter par exemple des gyromètres et/ou des accéléromètres afin de mesurer des composantes d'accélérations linéaires et/ou de vitesses angulaires d'une part de la pale, et d'autre part de la région du moyeu, non battante, située en vis-à-vis du pied de pale. L'utilisation d'un capteur battant (celui de la pale) et d'un capteur non battant (celui de référence) a pour effet de rendre complexe leurs implantations et leurs fonctionnements.

En outre, selon ce document et s'agissant de l'estimation des angles des pales, il convient d'intégrer au cours du temps les mesures des capteurs. Ce type de traitement peut engendrer des erreurs d'angles rédhibitoires.

On connait également le document WO 2018/081802 qui décrit un système de détection de l'état d'un rotor d'un giravion, état constitué par exemple par les positions angulaires de chacune des pales, afin de surveiller les élongations effectives des articulations et aider à la maintenance desdites articulations. Ce système utilise différents capteurs positionnés par exemple dans les butées sphériques en élastomère des pales ou bien directement sur les pales. Ces capteurs permettent de mesurer les angles de battement, de traînée et/ou de pas des pales ou bien des accélérations en certaines régions de ces pales. Ces capteurs sont par exemple des accéléromètres, des jauges de contraintes, des capteurs piézo-électriques, ou encore des capteurs de déplacement linéaire ou de rotation de type *LVDT* ou *RVDT* pour la désignation en langue anglaise « *Linear/Rotary Variable Differential Transformer* ». Ce dernier type de capteur comporte plusieurs organes se déplaçant mutuellement les uns par rapport aux autres, constituant ainsi des mécanismes fragiles.

On connait également les documents FR 2282644 et FR 2565270 décrivant un anémomètre utilisant notamment des mesures de la position de la commande de pas cyclique des pales du rotor principal pour déterminer les composantes longitudinale et latérale de la vitesse air.

Cet anémomètre utilise également des mesures de deux composantes du vecteur force spécifique du giravion, selon respectivement les axes longitudinal et latéral. Ces mesures de composantes du vecteur force spécifique permettent d'estimer l'inclinaison du plan du disque TPP par rapport au plan du fuselage formé par les axes longitudinal et latéral du repère fuselage. Cependant, cette estimation néglige les forces aérodynamiques et la poussée du rotor arrière, et s'en trouve entachée d'une grande imprécision.

On connait aussi des systèmes de mesure de déplacement angulaire des pales d'un rotor en rotation basés sur des caméras disposées sur la partie non battante du moyeu en rotation, associées à des logiciels de traitement d'images. La complexité d'un tel dispositif le rend difficile à déployer sur des giravions en exploitation commerciale. En outre, l'utilisation d'images rend ce système dépendant de la luminosité ambiante.

De plus, le document US2015/21 0382 décrit un dispositif et un procédé appliqué à un giravion comprenant un rotor muni de pales. Des données sont obtenues à partir d'une pluralité de capteurs situés sur le giravion et associés d'une part à un moyeu de ce rotor et d'autre part aux pales de ce rotor. Les capteurs peuvent comprendre des accéléromètres situés sur une pale et fournir des données concernant des angles, des vitesses, des accélérations ou encore des positions de cette pale. Ces données peuvent être traitées en relation avec un système de traitement afin d'obtenir un ou plusieurs états associés au fonctionnement de du giravion, par exemple l'angle de cône du rotor, l'inclinaison du plan du disque TPP.

Le document EP 2433866 décrit un système d'équilibrage d'un rotor pour giravion comprenant une unité de traitement de données, un capteur de vitesse et au moins un accéléromètre. Le capteur de vitesse est monté à proximité des pales du rotor du giravion, par exemple sur le fuselage du giravion, en dessous du rotor, et permet de mesurer la vitesse de rotation et la position des pales. La vitesse de rotation et la position des pales telles que détectées par le capteur de vitesses permettent alors de calculer les masses et leurs emplacements optimaux sur les pales pour compenser les anomalies vibratoires rencontrées sur le rotor.

L'arrière plan technologique de l'invention comporte notamment les documents EP 3025958, FR 2961306 et EP 3201084.

La présente invention vise à s'affranchir des limitations de l'art antérieur mentionnées ci-dessus et a pour objet de mesurer avec précision et de manière robuste un état d'un rotor d'un giravion.

Un objet de la présente invention est un procédé de détermination d'un état d'un rotor d'un giravion.

Le giravion comporte un fuselage et au moins un rotor muni d'un mât, d'un moyeu et d'une pluralité de pales. Chaque pale comporte une première extrémité liée et une seconde extrémité libre. Le moyeu est lié au mât et tourne autour d'un axe A1 du mât. Chaque pale est liée par sa première extrémité au moyeu. Chaque pale est mobile en rotation autour d'au moins un axe d'articulation de la pale, la seconde extrémité libre d'une pale décrivant, lors d'une rotation du moyeu autour de l'axe A1, une trajectoire voisine d'un plan moyen dit « plan du disque TPP ».

Un repère (X, Y, Z) est défini, lié au rotor, mais non tournant par rapport au fuselage du giravion. L'axe longitudinal X dudit repère est formé par la projection sur le plan du disque TPP de l'axe longitudinal du repère fuselage attaché au giravion et orienté de l'arrière du giravion vers l'avant du giravion, l'axe latéral Y dudit repère est compris dans le plan du disque, perpendiculaire audit axe longitudinal X, et orienté de gauche à droite et l'axe normal Z dudit repère est orienté perpendiculairement au plan du disque TPP, du haut vers le bas. Le plan du disque TPP est ainsi formé par les axes longitudinal X et latéral Y.

Ce procédé est remarquable en ce qu'il comporte les étapes comme décrites dans la revendication 1. Dans le mode préféré de réalisation de la présente invention, ledit rotor est un rotor principal du giravion, assurant la sustentation et la propulsion du giravion. Mais la mise en œuvre du procédé sur un rotor arrière anticouple, voire une hélice de propulsion du giravion ne sort pas du cadre de la présente invention. Lesdites mesures directes peuvent avantageusement être issues d'un gyromètre, par exemple de type MEMS pour la désignation en langue anglaise « *Micro-Electro-Mechanical System* », dont on connait la fiabilité due à leur structure monolithique, procurant ainsi au procédé conforme à l'invention une plus grande robustesse que celle de l'art antérieur. Lesdites mesures directes peuvent également être issues d'un gyromètre d'un autre type ou bien d'un autre dispositif permettant de déterminer une vitesse angulaire.

L'expression « mesure directe » signifie que la mesure est effectuée directement dans le plan du disque TPP, uniquement à l'aide d'au moins un capteur solidaire d'une pale, et sans utiliser une information complémentaire relative à un instant de passage de la pale vis à vis d'un repère fixe attaché au fuselage du giravion.

Chaque pale est reliée au moyeu et est mobile vis-à-vis du moyeu autour d'au moins un axe d'articulation, à savoir un axe de pas, un axe de battement et/ou un axe de traînée. L'axe de pas peut par exemple être constitué par une droite contenue dans la pale, solidaire de la pale et formant un rayon du disque rotor. De même, l'axe de battement peut être constitué par une droite solidaire de la pale, perpendiculaire à l'axe de pas, et dont la direction est une tangente à la périphérie du disque rotor au point de l'extrémité libre de ladite pale. L'axe de traînée peut quant à lui être constitué par une droite solidaire de la pale et normale au disque rotor. Chaque pale peut être reliée au moyeu par exemple par l'intermédiaire d'une articulation mécanique ou bien par l'intermédiaire d'une liaison souple. Les axes des trois articulations peuvent être concourants et les trois articulations constituées d'une unique butée sphérique.

Au cours de la première étape du procédé selon l'invention, la mesure directe de l'évolution au cours du temps de la composante de vitesse angulaire $\omega_\theta(t)$ d'une pale autour de l'axe de pas dudit au moins un axe d'articulation de la pale par rapport à un repère inertiel est mise en œuvre par l'intermédiaire d'au moins un capteur solidaire de la pale. Chaque capteur comporte au moins un gyromètre. Ledit au moins un axe d'articulation d'une pale comporte au moins un axe de pas. Un axe de sensibilité d'au moins un gyromètre est par exemple orienté parallèlement à cet axe de pas de la pale. Dans le cas où un seul axe de mesure est mis en œuvre lors de cette étape de mesure, privilégier l'axe de pas permet la plus grande richesse d'observation des états du rotor.

Toutefois, les capteurs disponibles sur le marché et susceptibles d'être utilisés dans le cadre de l'invention sont pour la plupart multiaxes, par exemple des gyromètres de type MEMS dits « XYZ » ou « 3D », sans en compromettre ni le prix, ni la complexité. Ainsi, chaque capteur peut avantageusement comporter un gyromètre multiaxe, typiquement triaxial, avec trois axes de sensibilité agencés de sorte à déterminer, directement ou par calcul, une projection des mesures de ce gyromètre sur l'axe de pas de la pale quelles que soient les orientations de ses axes de sensibilité. Chaque capteur comporte par exemple un ou plusieurs micro-capteurs inertiels de type MEMS robustes et capables de résister à l'environnement d'une pale.

De même, chaque capteur peut comporter des axes de sensibilité gyrométriques agencés de sorte qu'ils soient par exemple orientés respectivement parallèlement à l'axe de pas, à l'axe de battement et à l'axe de traînée de la pale. Alternativement, les axes de sensibilité peuvent être agencés selon des axes diagonaux du repère {pas, battement, trainée}. Les projections sur les axes désirés étant alors reconstituées par calcul. De plus, une pale du rotor peut comporter également un accéléromètre dont l'axe de sensibilité est agencé parallèlement à l'axe de battement de la pale afin d'évaluer la valeur statique de l'angle de la pale autour de l'axe de traînée.

Un dispositif utilisant des gyromètres et en particulier des gyromètres de type MEMS est ainsi plus précis et bien plus robuste que des caméras ou que des capteurs de déplacement de rotation ou linéaire de type RVDT/LVDT.

Cette mesure directe de l'évolution au cours du temps de la composante de vitesse angulaire $\omega(t)$ d'une pale est effectuée par rapport à un repère dit « inertiel », c'est-à-dire un repère dont les axes pointent des directions fixes par rapport aux étoiles lointaines.

Au cours de la deuxième étape du procédé selon l'invention, la détermination d'un état d'un rotor est réalisée suite à un traitement de ladite composante de vitesse angulaire $\omega(t)$ de la pale autour d'un axe d'articulation de la pale.

En effet, la vitesse angulaire d'une pale d'un rotor autour d'un axe d'articulation de la pale peut être assimilée à la somme de la dérivée par rapport au temps de l'angle de la pale autour de cet axe d'articulation, et de la projection de la vitesse de rotation du moyeu du rotor. De plus, l'angle d'une pale d'un rotor autour d'un axe d'articulation de la pale est une fonction périodique du temps dont la période est égale à celle de révolution du rotor. En conséquence, la vitesse angulaire de la pale autour de cet axe d'articulation est également une fonction périodique du temps. L'angle et sa dérivée peuvent s'exprimer sous la forme d'un développement en série de Fourier.

Lorsqu'un axe d'articulation de la pale est l'axe de pas de la pale, l'angle $\theta$ d'une pale autour de son axe de pas peut se décomposer selon le pas collectif $\theta_0$, le pas cyclique longitudinal $\theta_{1S}$ contrôlant l'inclinaison longitudinale du disque rotor autour de l'axe latéral Y du repère (X, Y, Z) non tournant attaché au rotor et le pas cyclique latéral $\theta_{1C}$ contrôlant l'inclinaison latérale du disque rotor autour de l'axe longitudinal X de ce repère (X, Y, Z). Cet angle $\theta$ est une fonction périodique du temps $t$, la période de cette fonction étant égale à $2\pi/\Omega$, $\Omega$ étant la vitesse de rotation, en radians par seconde, du moyeu du rotor autour de l'axe A1 du mât du rotor. Cet angle $\theta$ d'une pale peut ainsi s'exprimer sous la forme d'un développement en série de Fourier en fonction du temps $t$ tel que :

$$\theta = \theta_0 + \theta_{1S}.\sin(\Omega.t) + \theta_{1C}.\cos(\Omega.t) + \theta_{2S}.\sin 2(\Omega.t) + \theta_{2C}.\cos 2(\Omega.t)\ldots \qquad ,$$

$$(E1)$$

avec :

$\theta_0$ : composante continue,
$\theta_{1C}$ et $\theta_{1S}$ : coefficients de la composante fondamentale, désignée également composante harmonique de rang 1, correspondant à la fréquence $\Omega/2\pi$,

$\theta_{iC}$ et $\theta_{iS}$ : coefficients de l'harmonique de rang *i*, *i* étant un nombre entier supérieur ou égal à 2, d'amplitudes usuellement négligeables sur un rotor dont les pas des pales sont commandés par un plateau cyclique, et
$\Omega$ : la vitesse de rotation du moyeu du rotor, exprimée en radians par seconde.

Le pas collectif $\theta_0$ est la composante continue de cette décomposition en série de Fourier, et correspond donc à une valeur moyenne de l'angle $\theta$ sur une révolution complète de la pale. Le pas cyclique latéral $\theta_{1C}$ et le pas cyclique longitudinal $\theta_{1S}$ sont les coefficients des fonctions cosinus et sinus de l'harmonique de rang 1, ou fondamental, de cette décomposition en série de Fourier. On sait que, dans le cas d'un rotor commandé par un plateau cyclique conventionnel, les oscillations des pales autour de leur axe de pas sont des fonctions sinusoïdales de fréquence égale à celle de rotation du rotor. Le développement en série de Fourier de l'angle $\theta$ d'une pale peut donc être tronqué à l'harmonique de rang 1 (ou fondamental), et s'écrire :

$$\theta = \theta_0 + \theta_{1S}.\sin(\Omega.t) + \theta_{1C}.\cos(\Omega.t). \quad (E2)$$

Par ailleurs, on rappelle que le pas collectif $\theta_0$ d'une pale est invariant au changement de plan de référence (plan du disque TPP ou plan du moyeu HP par exemple). A contrario, les pas cycliques latéral $\theta_{1C}$ et longitudinal $\theta_{1S}$ de la pale sont différents selon qu'ils sont exprimés par rapport au plan du disque TPP ou bien par rapport au plan moyeu HP. Les relations de passage de la référence plan du disque TPP à la référence plan moyeu HP pour les pas cycliques latéral $\theta_{1C}$ et longitudinal $\theta_{1S}$ s'écrivent par exemple, dans le cas d'un rotor sans couplage pas/battement :

$$\theta_{1C/TPP} = \theta_{1C/HP} + \beta_{1S}, \quad (E3)$$

$$\theta_{1S/TPP} = \theta_{1S/HP} - \beta_{1C}, \quad (E4)$$

avec :

$\theta_{1S/TPP}$ et $\theta_{1C/TPP}$ : estimations des pas cycliques longitudinal et latéral d'une pale du rotor par rapport au plan du disque TPP,
$\theta_{1S/HP}$ et $\theta_{1C/HP}$ : estimations des pas cycliques longitudinal et latéral d'une pale du rotor par rapport au plan moyeu HP, et
$\beta_{1C}$ et $\beta_{1S}$ : inclinaison du plan du disque TPP vis à vis du plan moyeu HP respectivement autour de l'axe latéral Y et autour de l'axe longitudinal X.

Pour les autres types de rotor, présentant un couplage pas/battement non nul, les relations E3 et E4 doivent être généralisées par la prise en compte d'un coefficient de couplage pas/battement désigné par exemple sous l'appellation « liaison K » ou encore « angle $\delta_3$ ».
L'angle $\theta_{TPP}$ d'une pale peut alors être exprimé par rapport au plan du disque TPP par la relation :

$$\theta_{TPP} = \theta_0 + \theta_{1S/TPP}.\sin(\Omega.t) + \theta_{1C/TPP}.\cos(\Omega.t). \quad (E5)$$

Au cours de la première étape du procédé selon l'invention, la mesure de la composante de vitesse angulaire $\omega_\theta$ (t) d'une pale autour de l'axe de pas a été effectuée.
La vitesse angulaire $\omega_\theta$(t) de la pale autour de son axe de pas peut être assimilée à la somme de la dérivée par rapport au temps *t* de l'angle $\theta_{TPP}$(t) de la pale autour de cet axe de pas, et de la projection de la vitesse de rotation du moyeu du rotor. Dès lors, la vitesse angulaire $\omega_\theta$(t) de la pale autour de son axe de pas est une fonction périodique du temps, comme l'est l'angle $\theta_{TPP}$. La vitesse angulaire $\omega_\theta$(t) peut ainsi s'exprimer, en négligeant l'éventuelle vitesse de basculement du plan du disque TPP, sous la forme d'un développement en série de Fourier :

$$\omega_\theta(t) = \Omega.\sin\beta_0 + \Omega.\theta_{1S/TPP}.\cos(\Omega.t) - \Omega.\theta_{1C/TPP}.\sin(\Omega.t), \quad (E6)$$

avec :

$\Omega.\sin\beta_0$ : valeur moyenne, ou « composante continue », constituant la projection de la vitesse de rotation du moyeu du rotor,
$(\Omega.\theta_{1S/TPP})$ et $(-\Omega.\theta_{1C/TPP})$ : coefficients harmoniques de rang 1, correspondant à la fréquence $\Omega/2\pi$, et

$\beta_0$ : angle d'élévation de la pale par rapport au plan du disque TPP, caractérisant la conicité du rotor.

En conséquence, une estimation de l'angle d'élévation $\beta_0$ de la pale par rapport au plan du disque TPP, désigné également « angle de cône » du rotor ou encore « angle de battement moyen », ainsi que des estimations des pas cycliques longitudinal $\theta_{1S/TPP}$ et latéral $\theta_{1C/TPP}$ de la pale par rapport au plan du disque TPP peuvent avantageusement être obtenues à partir de la seule composante de vitesse angulaire $\omega_\theta(t)$ de la pale autour de son axe de pas et de la vitesse angulaire $\Omega$ du rotor autour de l'axe A1 de son mât.

Ces estimations de l'angle de cône $\beta_0$ du rotor et des pas cycliques longitudinal $\theta_{1S/TPP}$ et latéral $\theta_{1C/TPP}$ de la pale sont déterminées par extraction respectivement d'une valeur moyenne de la vitesse angulaire $\omega_\theta(t)$, ainsi que d'une amplitude et d'une phase de la composante sinusoïdale de rang 1 de la vitesse angulaire $\omega_\theta(t)$

Ces estimations de l'angle de cône $\beta_0$ du rotor et des pas cycliques longitudinal $\theta_{1S/TPP}$ et latéral $\theta_{1C/TPP}$ de la pale peuvent être obtenues en calculant les coefficients de la décomposition en série de Fourier de la vitesse angulaire $\omega_\theta$ (t), puis en divisant lesdits coefficients par la vitesse de rotation $\Omega$ du moyeu du rotor autour de l'axe A1. Un tel traitement peut être une analyse harmonique de la composante de vitesse angulaire $\omega_\theta(t)$ On notera que ce traitement de la composante de vitesse angulaire $\omega_\theta(t)$ permettant la séparation des composantes longitudinale et latérale de pas cyclique requière la connaissance de la phase rotor. Pour ce faire, dans un mode préféré de réalisation de l'invention, on exploite en outre un signal synchrone du passage d'une pale en regard d'un repère solidaire du fuselage pour obtenir une décomposition en série de Fourier convenablement phasée, ou cohérente, avec l'orientation du rotor. Un tel traitement de la composante de vitesse angulaire $\omega_\theta(t)$ est alors équivalent à une « démodulation synchrone ».

De plus, cet angle de cône $\beta_0$ est généralement faible, typiquement inférieur à 10°. De fait, en appliquant l'approximation des petits angles, la valeur moyenne de la vitesse angulaire $\omega_\theta(t)$ peut s'écrire : $\Omega.\beta_0$.

Dès lors, une décomposition de la vitesse angulaire $\omega_\theta(t)$ permet d'isoler sa valeur moyenne, puis d'en déduire l'angle de cône $\beta_0$ entre le plan du disque TPP et la pale. Ensuite, la conicité du rotor peut être déterminée.

De la sorte, l'état dudit rotor déterminé lors de la deuxième étape du procédé selon l'invention comporte au moins un angle de pas cyclique de la pale par rapport au plan du disque TPP déterminés suite à une extraction d'une amplitude et éventuellement d'une phase de la composante sinusoïdale fondamentale de la vitesse angulaire $\omega(t)$ de la pale autour d'un axe d'articulation de la pale.

L'état dudit rotor déterminé lors de la deuxième étape du procédé selon l'invention peut aussi comporter l'angle de cône $\beta_0$ du rotor déterminé suite à une extraction d'une valeur moyenne de la composante sinusoïdale fondamentale de la vitesse angulaire $\omega(t)$ de la pale autour d'un axe d'articulation de la pale.

On peut aussi utiliser par exemple l'une quelconque des méthodes suivantes pour effectuer une extraction de la valeur moyenne, ainsi que de l'amplitude et éventuellement de la phase de la composante sinusoïdale fondamentale de la vitesse angulaire $\omega(t)$ de la pale :

- décomposition en série de Fourier,
- résolution d'un système de trois équations à trois inconnues exploitant les mesures instantanées sur trois pales distinctes,
- résolution d'un système de N équations à trois inconnues exploitant les mesures instantanées de N pales, N étant un nombre entier strictement supérieur à 3, la surdétermination de N par rapport à 3 étant traitée par exemple par la méthode des moindres carrés,
- démodulation synchrone,
- méthode des moindres carrés récursive,
- méthode des moindres carrés non récursive,
- filtrage de Kalman.

L'utilisation de la composante de vitesse angulaire $\omega_\theta$ d'une pale autour de son axe de pas pour la détermination des estimations des pas cycliques longitudinal $\theta_{1S/TPP}$ et latéral $\theta_{1C/TPP}$ de la pale permet avantageusement à ce procédé de supprimer un des défauts dominants de la plupart des capteurs qui est le biais et surtout les instabilités de biais. En effet, le biais n'affecte que la mesure de la composante continue du signal périodique observé alors que les pas cycliques longitudinal $\theta_{1S/TPP}$ et latéral $\theta_{1C/TPP}$ engendrent les composantes alternatives à la fréquence fondamentale, du signal périodique de la vitesse angulaire $\omega_\theta(t)$ de la pale autour de son axe de pas.

De plus, ces pas cycliques longitudinal $\theta_{1S}$ et latéral $\theta_{1C}$ sont estimés directement par rapport au plan du disque TPP. En conséquence, dans les application où on cherche à estimer les pas d'une ou plusieurs pales par rapport à ce référentiel TPP, l'incertitude liée à l'estimation de l'inclinaison de ce plan du disque TPP par rapport au plan moyeu HP utilisée traditionnellement est supprimée, de même que le cumul des erreurs potentielles des deux capteurs utilisés, à savoir un capteur mesurant le pas cyclique d'une pale par rapport au HP et un autre capteur mesurant l'inclinaison du plan du disque TPP par rapport au plan moyeu HP. Le procédé de détermination d'un état d'un rotor selon l'invention peut de plus comprendre une ou plusieurs des caractéristiques qui suivent, prises seules ou en combinaison.

Le procédé selon l'invention peut comporter une étape intermédiaire de détection de l'instant de passage d'un premier repère attaché audit rotor en face d'un second repère attaché audit fuselage. Cette détection permet d'estimer, en mettant par exemple en œuvre une boucle à verrouillage de phase, la position angulaire $\psi$ autour de l'axe A1 du mât du rotor, également désignée par le terme « azimut », de chaque pale à chaque instant, et en particulier de chaque pale équipée d'un capteur. Cette détection de l'instant de passage peut prendre la forme d'un dispositif délivrant une impulsion à chaque passage du premier repère attaché au rotor en face du second repère attaché au fuselage, soit une impulsion à chaque tour du moyeu du rotor autour de l'axe A1.

La vitesse de rotation $\Omega$ du moyeu du rotor autour de l'axe A1 peut être déterminée à partir de ces instants de passage. En effet, l'azimut $\psi$ d'une pale est égal au produit de la vitesse de rotation $\Omega$ du moyeu du rotor autour de l'axe A1 et le temps $t$ tel que :

$$\psi = \Omega\, t.$$

Dès lors, la vitesse angulaire $\omega_\theta(t)$ de la pale autour de son axe de pas peut s'écrire :

$$\omega_\theta(t) = \Omega.\sin\beta_0 + \Omega.\theta_{1S/TPP}.\cos\psi - \Omega.\theta_{1C/TPP}.\sin\psi. \qquad (E7)$$

Le premier repère attaché au rotor peut être positionné sur le moyeu ou sur le mât du rotor. Il ne coïncide pas nécessairement avec la position angulaire d'une attache de pale. Le second repère attaché au fuselage est un point fixe du fuselage, qui peut être positionné par exemple à l'azimut arrière pour qu'il délivre une information d'azimut cohérente avec les conventions usuellement adoptées en physique du vol des giravions. Mais ce second repère peut aussi être positionné à n'importe quel azimut sans sortir du cadre de l'invention. L'instant de passage est acquis par l'intermédiaire d'un détecteur d'impulsion matérialisant la coïncidence du premier repère, attaché au rotor, avec le second repère, attaché au fuselage. Ce détecteur d'impulsion est par exemple basé sur une cellule à effet Hall et sur un aimant. La cellule à effet Hall est par exemple solidaire du fuselage du giravion, alignée avec le second repère, et réagit au passage de l'aimant solidaire du rotor et aligné avec le premier repère.

Selon un autre aspect, l'état du rotor peut comporter :

- les angles d'inclinaison longitudinale et latérale $\beta_{1C}$ et $\beta_{1S}$ du plan du disque TPP par rapport au plan moyeu HP, et/ou
- une force aérodynamique générée par le rotor.

La force aérodynamique générée par le rotor peut alors être déduite de l'angle de cône $\beta_0$ du rotor. Par suite, cette force aérodynamique contribue à l'équilibre du giravion en vol et en particulier cette force aérodynamique s'oppose essentiellement au poids apparent du giravion. Dès lors, si on néglige la traînée aérodynamique du fuselage, la masse courante $M$ du giravion peut être estimée à partir i) de cette force aérodynamique $F$ générée par le rotor, s'opposant essentiellement au poids apparent du giravion, et ii) de la force spécifique $\gamma$ subie par le fuselage du giravion, en appliquant la première loi de Newton ($M = F/\gamma$). L'estimation du poids apparent peut être améliorée en faisant intervenir dans son calcul une estimation de la traînée aérodynamique du fuselage, basée sur une mesure de sa vitesse par rapport à l'air. Cette amélioration permet une estimation plus précise de la masse courante, notamment à haute vitesse.

Ainsi, le procédé peut comporter des étapes complémentaires :

- une étape d'estimation d'une force aérodynamique générée par le rotor,
- une étape d'estimation du poids apparent du giravion et
- une étape d'estimation d'une masse courante du giravion.

Le procédé selon l'invention peut comporter des étapes supplémentaires afin de calculer les angles d'inclinaison longitudinale et latérale $\beta_{1C}$ et $\beta_{1S}$ du plan du disque TPP par rapport au plan moyeu HP :

- mesure d'un pas cyclique longitudinal $\theta_{1S|HP}$ et d'un pas cyclique latéral $\theta_{1C|HP}$ d'une pale par rapport à un plan moyeu HP perpendiculaire à l'axe A1 du mât du rotor, et
- calcul d'angles d'inclinaison longitudinale et latérale $\beta_{1C}$ et $\beta_{1S}$ du plan du disque TPP par rapport au plan moyeu HP, ces angles d'inclinaison $\beta_{1C}$ et $\beta_{1S}$ du plan du disque TPP étant fonction des estimations des pas cycliques longitudinal $\theta_{1S/TPP}$ et latéral $\theta_{1C/TPP}$ par rapport au plan du disque TPP et des pas cycliques longitudinal $\theta_{1S/HP}$ et latéral $\theta_{1C/HP}$ de la pale mesurés par rapport audit plan moyeu HP.

L'angle d'inclinaison latérale $\beta_{1S}$ du plan du disque TPP par rapport au plan moyeu HP est par exemple égal à la différence entre l'estimation du pas cyclique latéral $\theta_{1C/TPP}$ par rapport au plan du disque TPP et le pas cyclique latéral $\theta_{1C/HP}$ de la pale mesuré par rapport au plan moyen HP dans le cas particulier d'un rotor avec un couplage pas/battement nul. De même, pour un tel rotor sans couplage pas/battement, l'angle d'inclinaison longitudinale $\beta_{1C}$ du plan du disque TPP par rapport au plan moyen HP est égal à la différence entre l'estimation du pas cyclique longitudinal $\theta_{1S/TPP}$ par rapport au plan du disque TPP et le pas cyclique longitudinal $\theta_{1S|HP}$ de la pale mesuré par rapport au plan moyen HP.

Pour d'autres types de rotor, comportant par exemple un couplage pas/battement, le coefficient de couplage pas/battement est pris en compte dans le calcul des angles d'inclinaison longitudinale et latérale $\beta_{1C}$ et $\beta_{1S}$.

Le pas collectif $\theta_0$, les pas cycliques longitudinal $\theta_{1S/HP}$ et/ou latéral $\theta_{1C/HP}$ de la pale par rapport au plan moyen HP peuvent être mesurés au niveau de la partie non tournante d'un plateau cyclique commandant les variations de pas collectif et cyclique des pales, par exemple au niveau des servomécanismes actionnant cette partie non tournante de ce plateau cyclique ou bien, dans le cas d'un gyravion doté de commandes de vol conventionnelles, dans la timonerie de commande, voire au niveau d'un dispositif de commande, typiquement un levier ou un manche de commande des pas collectifs et cycliques des pales.

Toutefois, la mesure au plus près du plateau cyclique, tout en restant dans un repère non tournant, est préférable. En effet, une mesure au niveau d'un manche de commande des pas cycliques des pales est moins précise à cause notamment des dispersions dans la fabrication des timoneries des commandes de vol et/ou des jeux de fonctionnement ou des élasticités de ces timoneries.

De plus, dans le cas de gyravions à commandes de vol électriques, une telle mesure est facilement accessible car les servomécanismes de ce type de gyravion intègrent typiquement un capteur d'élongation.

Le procédé selon l'invention peut en outre comporter une étape de calcul d'un moment de flexion du mât du rotor du giravion à partir de ces angles d'inclinaison $\beta_{1C}$, $\beta_{1S}$ selon les axes longitudinal et latéral du giravion.

La relation permettant de déterminer ce moment de flexion du mât en fonction de l'inclinaison du disque fait intervenir le moment d'inertie des pales, la vitesse de rotation du moyeu du rotor ainsi que l'excentrement de l'articulation de battement des pales.

La connaissance de ce moment de flexion du mât du rotor du giravion permet avantageusement de protéger contre un dépassement d'un moment critique pour la tenue mécanique du giravion. Dès lors, le pilote du giravion peut adapter son pilotage et sa trajectoire afin de rester dans des conditions de vol pour lesquelles le moment de flexion du mât du rotor est en dessous de ce moment critique avec une marge suffisante. Dans le cas d'un giravion doté de commandes de vol électriques, cette protection peut être automatisée et faire partie des fonctions de protection de l'enveloppe de vol.

Le procédé peut aussi comporter une étape de réalisation d'un décollage assisté ou automatique du giravion en asservissant le plan du disque TPP sur une consigne prédéterminée d'inclinaison par rapport au plan horizontal.

En effet, les angles d'inclinaison $\beta_{1C}$, $\beta_{1S}$ selon les axes longitudinal et latéral du giravion définissent l'orientation du plan du disque TPP vis-à-vis du plan moyen HP. De plus, la force aérodynamique générée par le rotor en rotation est perpendiculaire à ce plan du disque TPP. Dès lors, en connaissant l'inclinaison de ce plan moyen HP par rapport au plan horizontal (inclinaison estimée par exemple par une centrale inertielle), on peut en déduire l'inclinaison du plan du disque TPP par rapport au plan horizontal, et un pilote automatique du giravion peut réaliser un décollage assisté ou automatique du giravion en asservissant par exemple le plan du disque TPP sur une consigne horizontale, afin que la force aérodynamique générée par le rotor en rotation soit verticale et assure ainsi un décollage sans translation horizontale, ou dérapage, du giravion quelle que soit la pente du terrain sur lequel le gyravion est posé et quelle que soit la vitesse et la direction du vent sur le site du décollage.

A titre de perfectionnement, le plan du disque TPP peut aussi être asservi sur une consigne légèrement inclinée par rapport au plan horizontal lors d'un tel décollage assisté ou automatique du giravion, pour contrer la poussée du rotor anticouple.

Cette étape de réalisation d'un décollage assisté ou automatique permet ainsi l'asservissement de l'inclinaison du rotor, plus précisément du plan du disque TPP, et en particulier son maintien sensiblement horizontal, quelle que soit la pente du terrain sur lequel se trouve le giravion et quel que soit le vent subi par le giravion, pendant que le pilote du giravion agit uniquement sur le levier de commande du pas collectif des pales du rotor afin de réaliser le décollage du giravion. Au cours de cette étape de réalisation d'un décollage assisté ou automatique, la commande des pas cycliques des pales du rotor du giravion est par exemple exploitée par l'asservissement. Les pas cycliques des pales du rotor sont ainsi pilotés automatiquement afin d'asservir les angles d'inclinaison longitudinale et latérale du plan du disque TPP par rapport à un plan horizontal dans un repère terrestre. Pour ce faire, le procédé exploite les angles de roulis et de tangage du giravion obtenus par exemple par une centrale inertielle ou bien un dispositif de type AHRS afin de déterminer l'orientation du giravion, et donc de son plan moyen HP et in fine du plan de son disque TPP, par rapport à la gravité terrestre.

La mesure directe de l'évolution au cours du temps de la composante de vitesse angulaire $\omega_\theta(t)$ d'une pale autour de l'axe de pas peut être effectuée sur au moins une pale du rotor. Mais elle peut avantageusement être effectuée sur plusieurs pales, voire sur toutes les pales du rotor, afin de diminuer la latence et d'améliorer la précision du procédé selon l'invention. De plus, la mesure directe de l'évolution de la composante de vitesse angulaire $\omega_\theta(t)$ sur plusieurs pales permet d'apporter d'une part une redondance au procédé selon l'invention en autorisant une surveillance de la cohérence des mesures issues des différentes pales du rotor, et d'autre part de la disponibilité en autorisant la détection d'un capteur en panne sur une pale et son exclusion, les capteurs des autres pales continuant d'être exploités. Par exemple, cette mesure est avantageusement effectuée sur toutes les pales du rotor, chacune des pales comportant un capteur.

La présente invention a également pour objet un dispositif de détermination d'un état du rotor d'un giravion, le giravion comportant un fuselage et au moins un rotor muni d'un mât, d'un moyeu et d'une pluralité de pales. Chaque pale comporte une première extrémité et une seconde extrémité, le moyeu étant solidaire du mât et tournant autour d'un axe A1 du mât. Chaque pale est liée par une première extrémité au moyeu, chaque pale étant mobile en rotation autour d'au moins un axe d'articulation de la pale, la seconde extrémité d'une pale décrivant, lors d'une rotation du moyeu autour de l'axe A1, une trajectoire voisine d'un plan moyen dit plan du disque TPP.

Ce dispositif est configuré pour mettre en œuvre le procédé tel que précédemment décrit afin d'estimer l'état du rotor du giravion. Ce dispositif est de préférence destiné à une pale d'un rotor principal du giravion, ce rotor principal assurant la sustentation et la propulsion du giravion. Toutefois, ce dispositif peut être appliqué à une pale d'un rotor arrière anticouple ou bien à une pale d'une hélice de propulsion d'un giravion.

Ce dispositif comporte :

- au moins un calculateur ayant au moins une mémoire,
- un détecteur d'impulsion 5 mesurant des instants de passage d'un premier repère 115 attaché audit rotor 11 en face d'un second repère 165 attaché audit fuselage 16 afin que ledit calculateur 2 détermine ledit signal synchrone du passage d'une pale 14 en regard dudit repère fixe et ladite vitesse angulaire ($\Omega$) de chaque pale 14 autour dudit axe A1,
- un capteur pour mesurer un pas cyclique longitudinal et un pas cyclique latéral de ladite pale par rapport à un plan moyen (HP) dudit moyeu perpendiculaire audit axe A1,
- un capteur 4 mesurant une évolution au cours du temps d'une composante de vitesse angulaire $\omega_\theta(t)$ d'une pale autour dudit axe d'articulation par rapport à un repère inertiel,
- et ledit au moins un calculateur déterminant ledit état dudit rotor.

Le capteur 4 comporte par exemple un gyromètre agencé dans une pale, un axe de sensibilité du gyromètre étant orienté parallèlement à un axe d'articulation de la pale, typiquement l'axe de pas de la pale, afin de mesurer la composante de vitesse angulaire $\omega(t)$ de la pale autour de cet axe d'articulation. Un capteur peut aussi être agencé dans chaque pale du rotor du giravion.

Le capteur 4 peut aussi comporter un gyromètre multiaxe, typiquement triaxial ou bien trois gyromètres, dont les axes de sensibilité sont orientés par exemple parallèlement respectivement à des axes distincts, et non parallèles entre eux, de la pale, par exemple parallèles respectivement à l'axe de pas, à l'axe de battement et à l'axe de traînée de la pale.

Ce capteur peut aussi comporter un accéléromètre dont l'axe de sensibilité est orienté parallèlement à l'axe de battement afin d'estimer une valeur statique de l'angle de la pale autour de son axe de traînée.

Le dispositif peut aussi comporter un détecteur d'impulsion détectant les instants de passage d'un premier repère attaché au rotor en face d'un second repère attaché au fuselage afin de délivrer une impulsion à chaque passage du premier repère en face du second repère de sorte par exemple à interpoler l'azimut $\psi$ de la pale autour de l'axe A1 et/ou la vitesse de rotation $\Omega$ du moyeu du rotor autour de l'axe A1 du mât du rotor.

De plus, le giravion peut comporter un dispositif de type AHRS fournissant notamment des forces spécifiques subies par le fuselage du giravion et les angles d'inclinaison du fuselage du giravion autour de ses axes de roulis et de tangage.

Le capteur peut comporter un accéléromètre dont l'axe de sensibilité est orienté parallèlement à l'axe de battement de la pale et un ou plusieurs gyromètres agencés dans une pale, dont les axes de sensibilité sont orientés respectivement parallèlement à des directions distinctes et non parallèles entre elles. L'invention permet alors une mesure des trois degrés de liberté de la pale respectivement autour de l'axe de pas, de l'axe de battement et de l'axe de traînée de la pale. De la sorte, des débattements angulaires réels des articulations de la pale peuvent être déterminés pour prédire un endommagement de (des) articulation(s) ou rotule(s) lamifiée(s), telles qu'une butée sphérique, et ainsi d'améliorer l'organisation de leur maintenance.

L'invention et ses avantages apparaîtront avec plus de détails dans le cadre de la description qui suit avec des exemples donnés à titre illustratif en référence aux figures annexées qui représentent :

- les figures 1 à 3, des giravions équipés d'un dispositif de détermination d'un état du rotor d'un giravion,
- les figures 4 à 7, des vues d'une pale,
- la figure 8, une représentation schématique du disque rotor et
- la figure 9, un graphe représentant l'évolution sur une révolution complète d'un rotor d'une composante de vitesse angulaire $\omega_\theta(t)$ de chaque pale de ce rotor autour de son axe de pas.

**EP 3 912 907 B1**

Les éléments présents dans plusieurs figures distinctes sont affectés d'une seule et même référence.

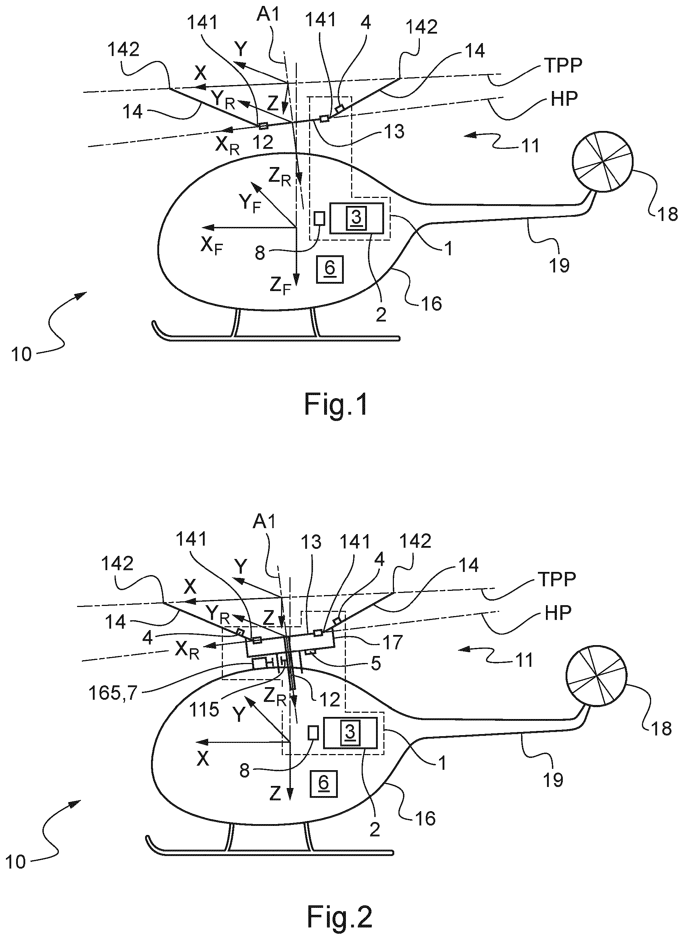

De façon commune aux figures 1 à 3, un giravion 10 comporte un rotor principal 11 positionné au-dessus d'un fuselage 16 du giravion 10 et un rotor arrière 18 anticouple positionné à l'extrémité arrière d'une poutre de queue 19.

Un repère fuselage $(X_F, Y_F, Z_F)$ est attaché au fuselage 16 de ce giravion 10. Un axe longitudinal $X_F$ du fuselage 16 du giravion 10 est orienté de l'arrière du giravion 10 vers l'avant du giravion 10. Un axe normal $Z_F$ est orienté de haut en bas perpendiculairement à l'axe longitudinal $X_F$ et, un axe latéral $Y_F$ est orienté de gauche à droite perpendiculairement aux axes longitudinal $X_F$ et normal $Z_F$.

Le rotor principal 11 comporte un mât 12, un moyeu 13 et des pales 14. Chaque pale 14 comporte une première extrémité 141 liée au moyeu 13 et une seconde extrémité 142 libre ainsi qu'un bord d'attaque 143 et un bord de fuite 144. Le mât 12 est solidaire du moyeu 13 et entraîne en rotation, autour d'un axe A1 du mât 12, le moyeu 13 ainsi que les pales 14.

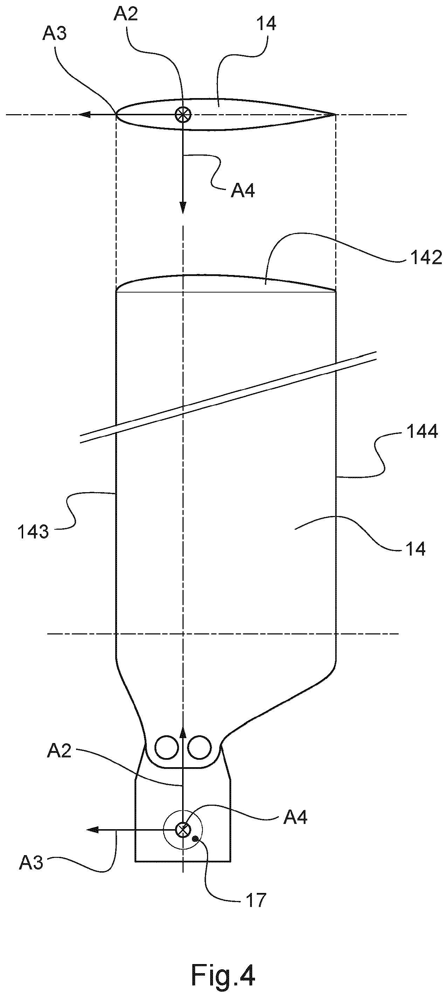

Chaque pale 14 est également mobile en rotation autour d'au moins un axe d'articulation, par exemple autour de son axe de pas A2 ainsi qu'autour de son axe de battement A3 et de son axe de traînée A4 comme représenté sur la figure 4.

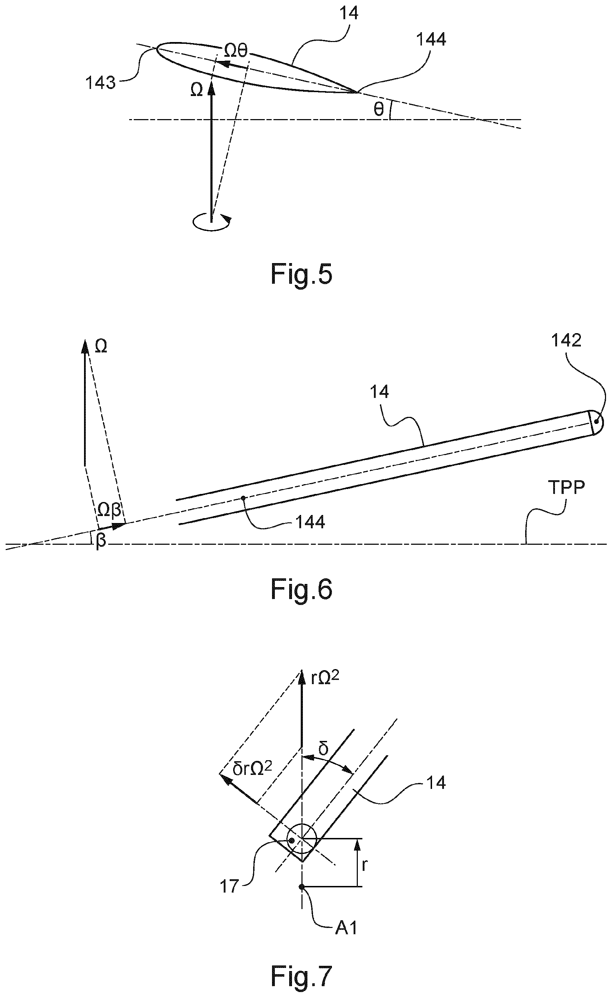

La figure 5 représente la pale 14 et son angle de pas $\theta$.

La figure 6 représente la pale 14 et son angle de battement $\beta$.

La figure 7 représente la pale 14 et son angle de traînée $\delta$.

Dès lors, au cours d'une rotation du moyeu 13 autour de l'axe A1, chaque point du moyeu 13 se déplace dans un plan moyeu HP perpendiculaire à l'axe A1 du mât 12 alors que la seconde extrémité libre 142 de chaque pale 14 décrit une trajectoire sensiblement plane, voisine d'un plan moyen dit « plan du disque TPP ». La trajectoire de la seconde extrémité 142 libre de chaque pale 14 connaît en réalité de faibles fluctuations de part et d'autre du plan du disque TPP, qu'on peut généralement négliger. La projection de cette trajectoire dans le plan du disque TPP est sensiblement circulaire.

L'axe de pas A2 peut par exemple être constitué par une droite contenue dans la pale 14, solidaire de la pale 14 et formant un rayon du disque rotor. De même, l'axe de battement A3 peut être constitué par une droite solidaire de la pale 14, perpendiculaire à l'axe de pas A2, et dont la direction est une tangente à la périphérie du disque rotor au point de l'extrémité libre 142 de ladite pale 14. L'axe de traînée A4 peut quant à lui être constitué par une droite solidaire de la pale 14 et normale au plan du disque rotor.

En outre, chaque pale 14 peut être reliée au moyeu 13 par exemple par l'intermédiaire de trois articulations mécaniques, ou bien par l'intermédiaire d'une liaison souple, ou bien encore par l'intermédiaire d'une butée sphérique 17 jouant à elle seule le rôle des trois articulations. De plus, chaque pale 14 forme un disque rotor lors de la rotation du moyeu 13 autour de l'axe A1 du mât 12.

Un autre repère fuselage $(X_R, Y_R, Z_R)$ est également lié au fuselage 16 du giravion 10 et est plus précisément solidaire du plan moyeu HP. Cet autre repère fuselage $(X_R, Y_R, Z_R)$ est non tournant par rapport au fuselage 16 du giravion 10, un axe longitudinal $X_R$ étant formé par une projection sur le plan moyeu HP de l'axe longitudinal $X_F$ du repère fuselage $(X_F, Y_F, Z_F)$, un axe latéral $Y_R$ étant formé par une projection sur le plan moyeu HP de l'axe latéral $Y_F$ et un axe normal $Z_R$ étant orienté perpendiculairement au plan moyeu HP, du haut vers le bas.

Un repère $(X, Y, Z)$ peut aussi être solidaire du plan du disque TPP. Ce repère $(X, Y, Z)$ est non tournant par rapport au fuselage 16 du giravion 10, un axe longitudinal X étant formé par une projection sur le plan du disque TPP de l'axe longitudinale $X_F$ du repère fuselage $(X_F, Y_F, Z_F)$, un axe latéral Y étant formé par une projection sur le plan du disque TPP de l'axe latéral $Y_F$ et un axe normal Z étant orienté perpendiculairement au plan du disque TPP, du haut vers le bas.

Le giravion 10 comporte un dispositif 1 de détermination d'un état du rotor principal 11 du giravion 10. Ce dispositif 1 se base principalement sur l'exploitation des oscillations sinusoïdales d'au moins une pale 14 du rotor principal 11 du giravion 10 autour d'au moins un axe d'articulation de cette pale 14 afin de déterminer cet état du rotor principal 11 du giravion 10.

Toutefois, ce dispositif 1 peut aussi être adapté afin de déterminer l'état du rotor arrière 18 du giravion 10 en se basant sur l'exploitation des oscillations sinusoïdales d'au moins une pale du rotor arrière 18 du giravion 10 autour d'au moins un axe d'articulation de cette pale.

Le dispositif 1 de détermination d'un état du rotor principal 11 du giravion 10 peut se baser sur l'exploitation des oscillations sinusoïdales du pas d'au moins une pale 14 du rotor principal 11 autour de son axe de pas A2. Le dispositif 1 peut aussi se baser sur l'exploitation des oscillations sinusoïdales des mouvements d'une pale 14 autour de son axe de battement A3 et/ou de son axe de traînée A4.

L'état du rotor comporte en particulier un pas cyclique longitudinal $\theta_{1S/TPP}$ et un pas cyclique latéral $\theta_{1C/TPP}$ d'une pale 14 du rotor principal 11 par rapport audit plan du disque TPP. L'état du rotor peut aussi comporter l'angle de cône $\beta_0$ de la pale 14 ainsi que des angles d'inclinaison longitudinale et latérale $\beta_{1C}$ et $\beta_{1S}$ du plan du disque TPP par rapport au plan moyeu HP et/ou une force aérodynamique générée par le rotor principal 11.

Le dispositif 1 de détermination d'un état du rotor principal 11 du giravion 10 comporte un calculateur 2 muni d'une mémoire 3. De plus, le dispositif 1 comporte un capteur 4 sur au moins une pale 14 du rotor principal 11. Ce dispositif 1 est configuré pour mettre en œuvre un procédé de détermination d'un état du rotor principal 11 du giravion 10 afin de déterminer l'état du rotor principal 11 du giravion 10.

La mémoire 3 du calculateur 2 stocke au moins un code exécutable d'un algorithme pour la réalisation de ce procédé. Un calculateur 2 exécute ce code. Le calculateur 2 peut comprendre par exemple au moins un processeur et au moins une mémoire, ou au moins un réseau logique programmable, au moins un circuit intégré, au moins un système programmable, au moins un circuit logique, au moins un circuit analogique, ces exemples ne limitant pas la portée donnée à l'expression « calculateur ». Le calculateur 2 peut être un calculateur dédié à la réalisation de ce procédé ou bien un calculateur du giravion 10 ayant une pluralité de fonctions.

Le capteur 4 comporte par exemple au moins un gyromètre agencé dans une pale 14. Un axe de sensibilité du gyromètre peut être orienté parallèlement à l'axe de pas A2 de la pale 14. Le capteur 4 mesure une composante de vitesse angulaire $\omega_\theta$(t) d'une pale 14 autour de l'axe de pas A2 de cette pale 14 par rapport à un repère inertiel. De la sorte, le capteur 4 permet de mesurer l'évolution au cours du temps de cette composante de vitesse angulaire $\omega_\theta$(t) d'une pale 14 autour de son axe de pas A2 par rapport à un repère inertiel. La mesure $\omega_\theta$ d'un gyromètre dont l'axe de sensibilité est orienté parallèlement à l'axe de pas A2 peut s'écrire :

$$\omega_\theta = \dot{\theta} + \Omega.\beta \cong \Omega.(\beta_0 + \theta_{1S}.cos\,\psi - \theta_{1C}.sin\,\psi),$$

$\dot{\theta}$ étant la dérivée par rapport au temps de l'angle de pas de la pale 14,

$\Omega$ étant la vitesse de rotation du moyeu 13 du rotor 11,

$\beta$ étant l'angle de battement de la pale 14,

$\beta_0$ étant l'angle de battement moyen, ou angle de cône ou angle d'élévation de la pale 14 par rapport au plan du disque TPP (par définition du plan du disque TPP, les composantes en sinus et cosinus de l'angle de battement, $\beta_{1c}$ et $\beta_{1s}$, sont nulles quand elles sont référencées à ce plan, d'où l'égalité $\beta = \beta_0$) et,

$\theta_{1S}$ et $\theta_{1C}$ étant les pas cycliques longitudinal et latéral de la pale 14.

Un axe de sensibilité du gyromètre peut aussi être orienté parallèlement à l'axe de battement A3 de la pale 14. Le capteur 4 mesure une composante de vitesse angulaire $\omega_\beta$(t) d'une pale 14 autour de l'axe de battement A3 de cette pale 14 par rapport à un repère inertiel. De la sorte, le capteur 4 permet de mesurer l'évolution au cours du temps de cette composante de vitesse angulaire $\omega_\beta$(t) d'une pale 14 autour de son axe de battement A3 par rapport à un repère inertiel. La mesure $\omega_\beta$ d'un gyromètre dont l'axe de sensibilité est orienté parallèlement à l'axe de battement A3 peut s'écrire :

$$\omega_\beta = \dot{\beta} + \Omega.\theta \cong \Omega.(\theta_0 + \theta_{1S}.sin\,\psi + \theta_{1C}.cos\,\psi),$$

$\dot{\beta}$ étant la dérivée par rapport au temps de l'angle de battement (nulle quand le plan de référence est le plan du disque TPP),

$\Omega$ étant la vitesse de rotation du moyeu 13 du rotor 11,

$\theta$ étant l'angle de pas de la pale 14,

$\theta_0$ étant le pas collectif de la pale 14, et

$\theta_{1S}$ et $\theta_{1C}$ étant les pas cycliques longitudinal et latéral de la pale 14.

Un axe de sensibilité du gyromètre peut également être orienté parallèlement à l'axe de trainée A4 de la pale 14. Le capteur 4 mesure une composante de vitesse angulaire $\omega_\delta$(t) d'une pale 14 autour de l'axe de trainée A4 de cette pale 14 par rapport à un repère inertiel. De la sorte, le capteur 4 permet de mesurer l'évolution au cours du temps de cette composante de vitesse angulaire $\omega_\delta$(t) d'une pale 14 autour de son axe de trainée A4 par rapport à un repère inertiel. La mesure $\omega_\delta$ d'un gyromètre dont l'axe de sensibilité est orienté parallèlement à l'axe de traînée A4 peut s'écrire :

$$\omega_\delta = \dot{\delta} + \Omega,$$

$\dot{\delta}$ étant la dérivée par rapport au temps de l'angle de traînée, et

$\Omega$, la vitesse de rotation du moyeu 13 du rotor 11.

Le capteur 4 peut également comporter un gyromètre multiaxe ou bien deux gyromètres dont les axes de sensibilité peuvent être orientés respectivement parallèlement à l'axe de pas et l'axe de battement A3 de la pale 14. De la sorte, le capteur 4 permet de mesurer l'évolution au cours du temps des composantes de vitesse angulaire $\omega_\theta$(t), $\omega_\beta$(t) et $\omega_\delta$(t) d'une pale 14 autour respectivement de son axe de pas A2, de son axe de battement A3 et de son axe de trainée A4 par rapport à un repère inertiel.

Le capteur 4 peut aussi comporter un gyromètre triaxial ou bien trois gyromètres dont les axes de sensibilité peuvent être orientés respectivement parallèlement à l'axe de pas A2, l'axe de battement A3 et l'axe de traînée A4 de la pale 14.

Le capteur 4 peut également comporter un accéléromètre dont l'axe de sensibilité est orienté parallèlement à l'axe de battement A3 de la pale 14 afin d'estimer une valeur statique de l'angle de la pale 14 autour de son axe de traînée A4. Cet accéléromètre peut être positionné par exemple à l'aplomb d'une butée sphérique 17, comme représenté sur la figure 7. La mesure $\gamma_\beta$ de cet accéléromètre ainsi positionné peut alors s'écrire :

$$\gamma_\beta = \delta.r.\Omega^2,$$

$\delta$ étant l'angle de traînée,

$r$ étant la distance entre l'accéléromètre et l'axe de rotation A1, et $\Omega$ étant la vitesse de rotation du moyeu 13 du rotor 11.

La distance r et la vitesse de rotation $\Omega$ étant connues, on peut alors déduire l'angle de traînée $\delta(t)$, et notamment sa composante moyenne, ou statique, $\delta_0$.

De plus, le giravion 10 peut comporter un dispositif de type AHRS 6 fournissant notamment des forces spécifiques s'appliquant au fuselage 16 du giravion 10 par exemple selon les axes $X_F, Y_F, Z_F$. Le giravion 10 représenté sur la figure 1 comporte un seul capteur 4 agencé sur une pale 14 du rotor principal 11.

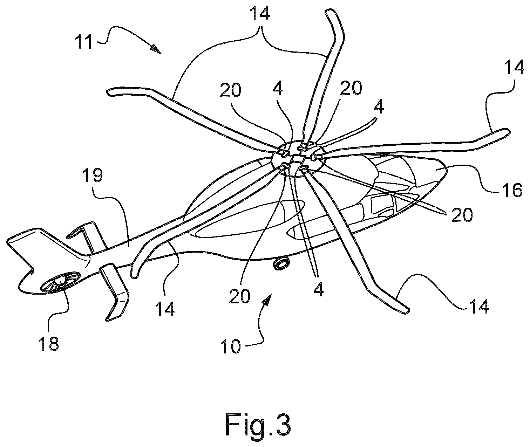

Selon la figure 2 et la figure 3, le giravion 10 comporte plusieurs capteurs 4, un capteur 4 étant agencé sur chaque pale 14 du rotor principal 11 du giravion 10.

Par exemple, selon la figure 3, le giravion 10 comporte cinq pales 14 et cinq capteurs 4. Un capteur 4 est par exemple positionné au niveau du manchon 20 de chaque pale 14.

Le giravion 10 représenté sur les figures 1 et 2 a l'axe A1 du mât 12 de son rotor 11 incliné de quelques degrés. Cette inclinaison est typiquement de 3 à 4°, vis-à-vis de l'axe normal $Z_F$, vers l'avant. Dès lors, le plan du moyeu HP est incliné par rapport à un plan formé par les axes longitudinal $X_F$ et latéral $Y_F$.

Sur le giravion 10 représenté sur la figure 2, le dispositif 1 comporte également un détecteur d'impulsion 5 détectant des instants de passage d'un premier repère 115 attaché au rotor principal 11 en face d'un second repère 165 attaché au fuselage 16. Les impulsions générées par ce détecteur d'impulsion 5 permettent ainsi au calculateur 2 de déterminer l'azimut $\psi$ de chaque pale 14 autour de l'axe A1 du mât 12 du rotor 11 ainsi que la vitesse de rotation $\Omega$ du moyeu 13 autour de son axe A1. Ce détecteur d'impulsion 5 comporte par exemple une cellule à effet Hall solidaire du second repère 165 du fuselage 16, et un aimant positionné solidaire du premier repère 115 du rotor principal 11.

Le giravion 10 comporte aussi un capteur 7 complémentaire agencé par exemple sur une partie non tournante d'un plateau cyclique 17 commandant les variations de pas des pales 4 comme représenté sur la figure 2 ou bien au niveau de chaque servomécanisme actionnant la partie non tournante de ce plateau cyclique 17 ou encore au niveau d'un dispositif de commande de la variation de pas des pales 4. Ce capteur 7 complémentaire peut mesurer ainsi directement ou indirectement un angle $\theta_{HP}$ de pas par rapport au plan moyeu HP.

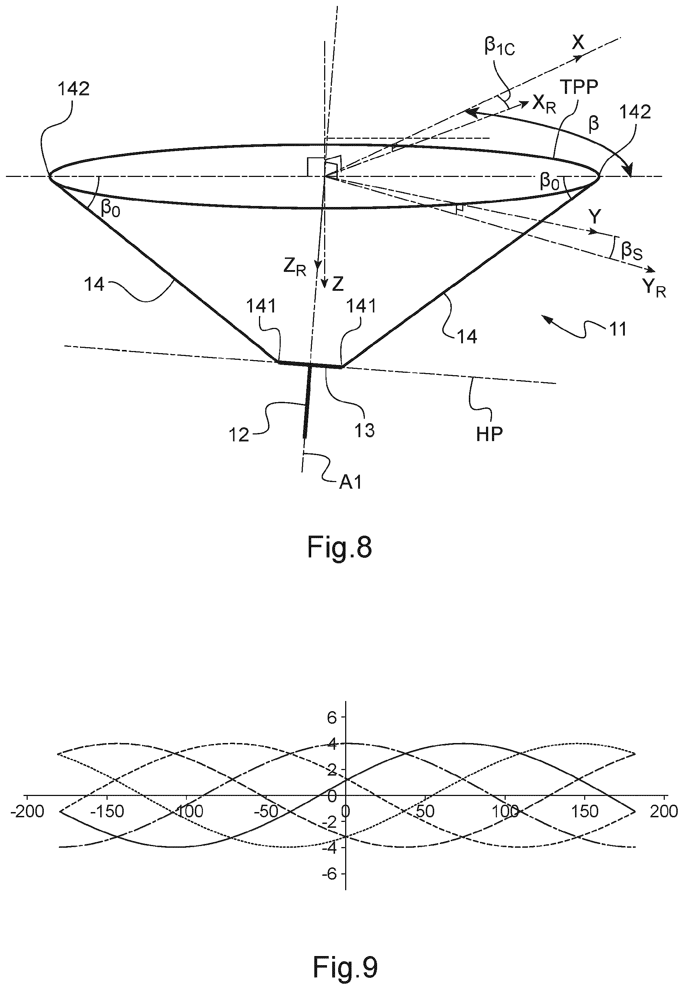

La figure 8 représente de façon schématique le rotor 11 ainsi que le plan du disque TPP et le plan moyeu HP. Le plan du disque TPP et le plan moyeu HP n'étant généralement pas parallèles, les pas cycliques longitudinal $\theta_{1S}$ et latéral $\theta_{1C}$ de chaque pale 14 du rotor 11 sont différents suivant s'ils sont mesurés par rapport au plan du disque TPP ou bien par rapport au plan moyeu HP. Les relations de passage entre ces deux plans de référence s'écrivent par exemple pour un rotor 11 présentant un couplage pas/battement nul :

$$\theta_{1C/TPP} = \theta_{1c/HP} + \beta_{1s}, \qquad (E3)$$

$$\theta_{1S/TPP} = \theta_{1S/HP} - \beta_{1c}, \qquad (E4)$$

avec :

$\theta_{1S/TPP}$ et $\theta_{1C/TPP}$ : pas cycliques longitudinal et latéral d'une pale 14 du rotor 11 par rapport au plan du disque TPP,
$\theta_{1S/HP}$ et $\theta_{1C/HP}$ : pas cycliques longitudinal et latéral d'une pale 14 du rotor 11 par rapport au plan moyeu HP, et
$\beta_{1C}$ et $\beta_{1S}$, l'inclinaison du plan du disque TPP vis à vis du plan moyeu HP respectivement longitudinale (i.e. autour de l'axe latéral $Y_F$) et latérale (i.e. autour de l'axe longitudinal $X_F$).

Pour un rotor 11 comportant un couplage pas/battement non nul, les relations de passage entre plans de référence peuvent comprendre un terme correctif, à savoir le coefficient de couplage pas/battement.

L'angle $\theta$ de pas comporte une composante collective $\theta_0$ et une composante cyclique se décomposant en une composante cyclique longitudinale $\theta_{1S}$ et une composante cyclique latérale $\theta_{1C}$.

Le procédé de détermination d'un état du rotor principal 11 du giravion 10 que peut mettre en œuvre le dispositif 1 comporte au moins les deux étapes suivantes :

- mesure directe de l'évolution au cours du temps d'une composante de vitesse angulaire $\omega_\theta(t)$ d'une pale 14 autour de son axe de pas A2 par rapport à un repère inertiel,
- détermination d'un état par traitement de la composante de vitesse angulaire $\omega_\theta(t)$.

La vitesse angulaire $\omega_\theta(t)$ d'une pale 14 autour de son axe de pas A2 dans le repère (X,Y,Z) attaché au plan du disque TPP est tout d'abord mesuré par un capteur 4 agencé sur cette pale 14. Cette vitesse angulaire $\omega_\theta(t)$ est égale à la dérivée par rapport au temps de l'angle $\theta_{TPP}$ de cette pale 14 dans le repère même (X,Y,Z) et peut à ce titre s'exprimer sous la forme d'un développement limité en série de Fourier en fonction de l'orientation angulaire $\Omega.t$ du rotor 11 autour de l'axe A1 tel que :

$$\omega_\theta(t) = \Omega.sin\,\beta_0 + \Omega.\theta_{1S/TPP}.cos(\Omega.t) - \Omega.\theta_{1C/TPP}.sin(\Omega.t), \qquad (E6)$$

avec :

$\Omega.sin\,\beta_0$ : valeur moyenne, ou composante continue,
$(\Omega.\theta_{1S/TPP})$ et $(-\Omega.\theta_{1C/TPP})$ : coefficients harmoniques de rang 1, correspondant à la fréquence $\Omega/2\pi$, et
$\beta_0$ : angle de cône ou d'élévation de la pale par rapport au plan du disque TPP, défini entre le plan du disque TPP et la pale 14.

La figure 9 comporte un graphe représentant l'évolution sur une révolution complète du rotor 11 des composantes des vitesses angulaires $\omega_\theta(t)$ de chacune des cinq pales 14 du rotor 11 autour de leur axe de pas A2. Ce graphe représente les signaux issus des cinq capteurs 4 équipant les cinq pales 14 du rotor principal 11 du giravion 10 représenté sur les figures 2 et 3.

A partir de l'expression (E6) de la vitesse angulaire $\omega_\theta(t)$ d'une pale 14, l'angle de cône $\beta_0$ ainsi que le pas cyclique longitudinal $\theta_{1S/TPP}$ et le pas cyclique latéral $\theta_{1C/TPP}$ de la pale 14 par rapport au plan du disque TPP, constituant un état du rotor 11, peuvent être estimés suite à ce traitement de la seule composante de vitesse angulaire $\omega_\theta(t)$, par exemple par une analyse harmonique, par l'intermédiaire du calculateur 2, selon l'une quelconque au moins des méthodes connues suivantes :

- décomposition en série de Fourier,
- résolution d'un système de trois équations à trois inconnues exploitant les mesures instantanées sur trois pales 14 distinctes,
- résolution d'un système de cinq équations à trois inconnues exploitant les mesures instantanées des cinq pales 14, la surdétermination de 5/3 étant résolue par exemple par la méthode des moindres carrés,
- démodulation synchrone,
- méthode des moindres carrés récursive,
- méthode des moindres carrés non récursive,
- filtrage de Kalman.

Ces estimations de l'angle de cône $\beta_0$ et des pas cycliques longitudinal $\theta_{1S/TPP}$ et latéral $\theta_{1C/TPP}$ de la pale 14 sont déterminées par extraction respectivement d'une valeur moyenne de la vitesse angulaire $\omega_\theta(t)$, ainsi que d'une amplitude et d'une phase de la composante sinusoïdale de rang 1 de la vitesse angulaire $\omega_\theta(t)$ par l'intermédiaire du calculateur 2.

Le procédé peut comporter une étape intermédiaire de mesure de l'instant de passage du premier repère 115 attaché au rotor 11 en face du second repère 165 attaché au fuselage 16 par l'intermédiaire du détecteur d'impulsion 5 afin que le calculateur 2 puisse déterminer l'azimut $\psi$ et la vitesse de rotation $\Omega$ de chaque pale 14 autour de l'axe A1 et en particulier de chaque pale 14 équipée d'un capteur 4. Par la suite, le calculateur 2 peut déterminer la phase de la composante sinusoïdale de la vitesse angulaire $\omega_\theta(t)$ de la pale 14 autour de son axe de pas A2.

En outre, l'état du rotor peut comporter les angles d'inclinaison longitudinale et latérale $\beta_{1C}$ et $\beta_{1S}$ du plan du disque TPP par rapport au plan moyeu HP et/ou une force aérodynamique générée par le rotor 11.

Afin de déterminer ces angles d'inclinaison $\beta_{1C}$ et $\beta_{1S}$ du plan du disque TPP par rapport au plan moyeu HP, le procédé peut comporter les étapes supplémentaires :

- mesure d'un pas cyclique longitudinal $\theta_{1S|HP}$ et d'un pas cyclique latéral $\theta_{1C|HP}$ de la pale 14 par rapport au plan moyeu HP perpendiculaire à l'axe A1, par l'intermédiaire du capteur 7 complémentaire et
- calcul d'angles d'inclinaison longitudinale et latérale $\beta_{1C}$ et $\beta_{1S}$ du plan du disque TPP par rapport au plan moyeu HP, en tant que fonctions des pas cycliques longitudinal $\theta_{1S/HP}$ et latéral $\theta_{1C/HP}$ de la pale 14 mesurés par rapport au plan moyeu HP et des estimations des pas cycliques longitudinal $\theta_{1S/TPP}$ et latéral $\theta_{1C/TPP}$ de la pale 14 par rapport au plan du disque TPP. Le cas échéant, ces fonctions font également intervenir le coefficient de couplage pas/battement.

Le procédé peut aussi comporter une étape de calcul d'un moment de flexion du mât 12 du rotor 11. La connaissance de ce moment de flexion du mât 12 du rotor principal 11 du giravion 10 permet avantageusement d'estimer les sollicitations mécaniques subies par le mât 12 du rotor principal 11 en particulier. Ce moment de flexion du mât 12 est déterminé en fonction du moment d'inertie des pales 14, de la vitesse de rotation $\Omega$ du moyeu du rotor 11 et de l'excentrement de l'axe de battement A3 des pales 14.

Le procédé peut également comporter une étape de réalisation d'un décollage assisté ou automatique du giravion 10 en asservissant le plan du disque TPP sur une consigne prédéterminée d'inclinaison par rapport à un plan horizontal d'un repère terrestre défini perpendiculairement à la direction de la gravité terrestre. Au cours de cette étape de réalisation d'un décollage assisté ou automatique du giravion 10, un pilote du giravion 10 agit uniquement sur un levier de commande du pas collectif des pales 14 du rotor 11, les pas cycliques des pales 14 du rotor 11 du giravion 10 étant piloté automatiquement afin d'asservir les angles d'inclinaison longitudinale et latérale du plan du disque TPP par rapport à un plan horizontal dans un repère terrestre en exploitant éventuellement les angles de roulis et de tangage du fuselage du giravion mesurés par exemple par le dispositif de type AHRS 6.

Le procédé peut également comporter une étape d'estimation d'une force aérodynamique générée par le rotor 11, une étape d'estimation du poids apparent du giravion 10 et une étape d'estimation d'une masse courante du giravion 10.

L'angle de cône $\beta_0$ permet de déterminer de façon connue la force aérodynamique générée par le rotor 11. Cette force aérodynamique contribue à l'équilibre du giravion 10 en vol en s'opposant en particulier au poids apparent du giravion 10 en vol stationnaire. La masse courante du giravion 10 peut alors être estimée en fonction de cette force aérodynamique générée par le rotor 11, de ce poids apparent du giravion 10 et de la force spécifique subie par le giravion 10 déterminée par exemple par le dispositif de type AHRS 6.

Par ailleurs, le rotor principal 11 peut comporter des butées sphériques 17 reliant respectivement une pale 14 au moyeu 13. Des estimations des trois angles de déflexion de chaque butée sphérique 17 peuvent être déterminées grâce au capteur 4 de sorte à déterminer les sollicitations mécaniques subies par chaque butée sphérique 17. Ensuite, un endommagement de chaque butée sphérique 17 peut être prédit afin de diminuer les coûts de la maintenance des butées sphériques 17.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes de réalisation possibles.

## Revendications

1.  Procédé de détermination d'un état d'un rotor (11) d'un giravion (10),

    ledit giravion (10) comportant un fuselage (16) et au moins un rotor (11) muni d'un mât (12), d'un moyeu (13) et d'une pluralité de pales (14), chaque pale (14) comportant une première extrémité (141) et une seconde extrémité (142), ledit moyeu (13) étant lié audit mât (12) et tournant autour d'un axe (A1) dudit mât (12), chaque pale (14) étant liée par une première extrémité (141) audit moyeu (13), chaque pale (14) étant mobile en rotation autour d'au moins un axe d'articulation de ladite pale (14), ladite seconde extrémité (142) d'une pale (14) décrivant, lors d'une rotation dudit moyeu (13) autour dudit axe (A1), une trajectoire voisine d'un plan moyen dit plan du disque (TPP),
    ledit procédé comportant l'étape suivante:

        - mesure directe de l'évolution au cours du temps d'une composante de vitesse angulaire ($\omega(t)$) d'une des pales (14) autour d'un axe de pas dudit au moins un axe d'articulation par rapport à un repère inertiel, et **caractérisé en ce que** le procédé comporte les étapes supplémentaires:

        - détermination d'un état dudit rotor (11) par traitement de ladite composante, ledit état du rotor comportant:

> un pas cyclique longitudinal ($\theta_{1S/TPP}$) et un pas cyclique latéral ($\theta_{1C/TPP}$) de ladite pale par rapport audit plan du disque (TPP) déterminés par extraction, effectuée par exploitation d'une composante de la vitesse angulaire ($\omega$(t)) et d'une vitesse angulaire ($\Omega$) du rotor autour de l'axe (A1) et d'acquisition d'un signal synchrone du passage d'une pale (14) en regard d'un repère fixe solidaire du fuselage, d'une amplitude et d'une phase de la composante sinusoïdale fondamentale de ladite vitesse angulaire (w(t)) de ladite pale autour dudit axe d'articulation, ladite composante sinusoïdale fondamentale étant **caractérisée par** sa fréquence égale à celle de rotation dudit moyeu dudit rotor autour dudit axe (A1),

ledit état du rotor comportant également:

- un angle de cône ($\beta_0$) de ladite pale par rapport audit plan du disque (TPP),
- des angles d'inclinaison longitudinale et latérale ($\beta_{1c}$ et $\beta_{1s}$) dudit plan du disque (TPP) par rapport à un plan (HP) dudit moyeu perpendiculaire audit axe (A1), ledit procédé comportant des étapes supplémentaires :

- mesure d'un pas cyclique longitudinal ($\theta_{1S/HP}$) et d'un pas cyclique latéral ($\theta_{1C/HP}$) de ladite pale (14) par rapport audit plan moyeu (HP), ledit pas cyclique longitudinal et ledit pas cyclique latéral de ladite pale (14) étant mesurés au niveau d'une partie non tournante d'un plateau cyclique commandant les variations de pas collectif et cyclique de ladite pale (14), au niveau des servomécanismes actionnant la partie non tournante dudit plateau cyclique ou bien au niveau d'un dispositif de commande desdits pas collectifs et cycliques de ladite pale (14), et
- calcul d'angles d'inclinaison longitudinale et latérale ($\beta_{1C}$ et $\beta_{1S}$) dudit plan du disque (TPP) par rapport audit plan moyeu (HP), lesdits angles d'inclinaison ($\beta_{1c}$ et $\beta_{1S}$) dudit plan du disque (TPP) étant fonction desdits pas cycliques longitudinal ($\theta_{1S/HP}$) et latéral ($\theta_{1C/HP}$) de ladite pale (14) mesurés par rapport audit plan moyeu (HP) et desdites estimations des pas cycliques longitudinal ($\theta_{1S/TPP}$) et latéral ($\theta_{1C/TPP}$) de ladite pale (14) par rapport audit plan du disque (TPP).

2. Procédé selon la revendication 1,
   **caractérisé en ce que** lors de ladite étape de détermination d'un état du dit rotor (11), ledit traitement est une analyse harmonique de ladite composante de vitesse angulaire ($\omega$(t)).

3. Procédé selon l'une quelconque des revendications 1 à 2,
   **caractérisé en ce que** ledit procédé comporte une étape intermédiaire de détection de l'instant de passage d'un premier repère (115) attaché audit rotor (11) en face d'un second repère (165) attaché audit fuselage (16).

4. Procédé selon l'une quelconque des revendications 1 à 3,
   **caractérisé en ce que** ladite extraction de ladite amplitude et de ladite phase de ladite composante sinusoïdale fondamentale de ladite vitesse angulaire ($\omega$(t)) de ladite pale (14) autour dudit axe d'articulation est effectuée par l'une quelconque au moins des méthodes suivantes :

   - décomposition en série de Fourier,
   - résolution d'un système de deux équations à deux inconnues exploitant les mesures instantanées sur deux pales (14) distinctes,
   - estimation, par la méthode des moindres carrés, des deux inconnues d'un système d'équations exploitant les mesures instantanées sur plus de deux pales (14) distinctes,
   - démodulation synchrone,
   - méthode des moindres carrés récursive,
   - méthode des moindres carrés non récursive,
   - filtrage de Kalman.

5. Procédé selon l'une quelconque des revendications 1 à 4, **caractérisé en ce que** ledit angle de cône ($\beta_0$) dudit rotor (11) est déterminé en fonction de la composante de vitesse angulaire ($\omega_\theta(t)$) autour de son axe de pas et de ladite vitesse angulaire ($\Omega$) du rotor autour de l'axe (A1), et par extraction d'une valeur moyenne de la composante sinusoïdale fondamentale de ladite vitesse angulaire ($\omega$(t)) de ladite pale (14) autour de l'axe de pas dudit au moins un axe d'articulation par l'une quelconque au moins des méthodes suivantes :

   - décomposition en série de Fourier,

- résolution d'un système de trois équations à trois inconnues exploitant les mesures instantanées sur trois pales (14) distinctes,
- estimation, par la méthode des moindres carrés, des trois inconnues d'un système d'équations exploitant les mesures instantanées de plus de trois pales (14) distinctes,
- démodulation synchrone,
- méthode des moindres carrés récursive,
- méthode des moindres carrés non récursive,
- filtrage de Kalman.

6. Procédé selon l'une quelconque des revendications 1 à 5,
**caractérisé en ce que** lesdits angles d'inclinaison ($\beta_{1C}$, $\beta_{1S}$) dudit plan du disque (TPP) sont égaux respectivement à des différences entre lesdits pas cycliques longitudinal ($\theta_{1S/HP}$) et latéral ($\theta_{1C/HP}$) de ladite pale (14) mesurés par rapport audit plan moyeu (HP) et lesdites estimations des pas cycliques longitudinal ($\theta_{1S/TPP}$) et latéral ($\theta_{1C/TPP}$) de ladite pale (14) par rapport audit plan du disque (TPP) ou bien égaux respectivement à un écart entre un terme correctif entre lesdits pas cycliques longitudinal ($\theta_{1S/HP}$) et latéral ($\theta_{1C/HP}$) de ladite pale (14) mesurés par rapport audit plan moyeu (HP) et lesdites estimations des pas cycliques longitudinal ($\theta_{1S/TPP}$) et latéral ($\theta_{1C/TPP}$) de ladite pale (14) par rapport audit plan du disque (TPP) en prenant en compte un coefficient de couplage pas/battement dudit rotor (11).

7. Procédé selon l'une quelconque des revendications 1 à 6,
**caractérisé en ce que** ledit procédé comporte une étape de calcul d'un moment de flexion dudit mât (12) dudit rotor (11) en fonction desdits angles d'inclinaison longitudinale et latérale ($\beta_{1C}$) et ($\beta_{1S}$).

8. Procédé selon l'une quelconque des revendications 1 à 6,
**caractérisé en ce que** ledit procédé comporte une étape de réalisation d'un décollage assisté ou automatique dudit giravion (10) en asservissant ledit plan du disque (TPP) selon une consigne prédéterminée d'inclinaison par rapport à un plan horizontal.

9. Procédé selon la revendication 8,
**caractérisé en ce qu'**au cours de ladite étape de réalisation d'un décollage assisté ou automatique dudit giravion (10), un pilote dudit giravion (10) agit uniquement sur un levier de commande du pas collectif desdites pales (14) dudit rotor (11), lesdits pas cycliques desdites pales (14) dudit rotor (11) étant pilotés automatiquement afin d'asservir lesdits angles d'inclinaison longitudinale et latérale dudit plan du disque (TPP) par rapport à un plan horizontal quelle que soit la pente du terrain et quel que soit le vent subi par ledit giravion (10).

10. Procédé selon la revendication 7,
**caractérisé en ce que** ledit procédé comporte :

- une étape d'estimation d'une force aérodynamique générée par ledit rotor (11) en fonction dudit angle de cône ($\beta_0$),
- une étape d'estimation du poids apparent dudit giravion (10) en fonction de ladite force aérodynamique générée par ledit rotor (11), et
- une étape d'estimation d'une masse courante dudit giravion (10) en fonction de ladite force aérodynamique générée par ledit rotor (11) et dudit poids apparent dudit giravion (10).

11. Dispositif (1) de détermination d'un état d'un rotor (11) d'un giravion (10), ledit giravion (10) comportant un fuselage (16) et au moins un rotor (11) muni d'un mât (12), d'un moyeu (13) et d'une pluralité de pales (14), chaque pale (14) comportant une première extrémité (141) et une seconde extrémité (142), ledit moyeu (13) étant lié audit mât (12) et tournant autour d'un axe (A1) dudit mât (11), chaque pale (14) étant liée par une première extrémité (141) audit moyeu (13), chaque pale (14) étant mobile en rotation autour d'un axe d'articulation de ladite pale (14), ladite seconde extrémité (142) d'une pale (14) décrivant, lors d'une rotation autour dudit axe (A1), une trajectoire voisine d'un plan moyen dit plan du disque (TPP),

**caractérisé en ce que** ledit dispositif (1) est configuré pour mettre en œuvre le procédé selon l'une quelconque des revendications 1 à 10, ledit dispositif (1) comportant :

- au moins un calculateur (2) ayant au moins une mémoire (3),
- un détecteur d'impulsion (5) mesurant des instants de passage d'un premier repère (115) attaché audit rotor

(11) en face d'un second repère (165) attaché audit fuselage (16) afin que ledit calculateur (2) détermine ledit signal synchrone du passage d'une pale (14) en regard dudit repère fixe et ladite vitesse angulaire ($\Omega$) de chaque pale (14) autour dudit axe (A1);
- un capteur (4) mesurant une évolution au cours du temps d'une composante de vitesse angulaire ($\omega(t)$) d'une pale (14) autour dudit axe d'articulation par rapport à un repère inertiel,
- un capteur (7) pour mesurer un pas cyclique longitudinal et un pas cyclique latéral de ladite pale (14) par rapport à un plan moyeu (HP) dudit moyeu (13) perpendiculaire audit axe (A1),
- un pilote automatique dudit giravion (10), et

**en ce que** ledit au moins un calculateur (2) déterminant ledit état dudit rotor (11).

**12.** Dispositif (1) selon la revendication 11,
**caractérisé en ce que** ledit capteur (4) est un gyromètre agencé dans une pale (14), un axe de sensibilité dudit gyromètre étant orienté, lors d'une utilisation sur ledit rotor (11), parallèlement audit axe d'articulation de ladite pale (14) afin de mesurer ladite composante de vitesse angulaire ($\omega(t)$) de ladite pale (14) autour dudit axe d'articulation.

**13.** Dispositif (1) selon la revendication 11,
**caractérisé en ce que**, ledit rotor (11) comportant des butées sphériques (17), une butée sphérique (17) reliant une pale (14) audit moyeu (13), ledit capteur (4) comporte un accéléromètre dont l'axe de sensibilité est orienté, lors d'une utilisation sur ledit rotor (11), parallèlement à un axe de battement (A3) de la pale (14) et un ou plusieurs gyromètres agencé dans une pale (14), dont des axes de sensibilité sont orientés respectivement parallèlement à un axe de pas (A2), à l'axe de battement (A3) et à un axe de traînée (A4) de ladite pale (14) afin d'estimer un angle de déflexion de chaque butée sphérique (17) de sorte à déterminer des sollicitations mécaniques subies par butée sphérique (17), de prédire un endommagement de ladite butée sphérique (17), et de diminuer les coûts d'une maintenance desdites butées sphériques (17).

**Patentansprüche**

**1.** Verfahren zum Bestimmen eines Zustands eines Rotors (11) eines Drehflüglers (10),

wobei der Drehflügler (10) einen Rumpf (16) und mindestens einen Rotor (11) mit einem Mast (12), einer Nabe (13) und einer Mehrzahl von Rotorblättern (14) aufweist, jedes Rotorblatt (14) ein erstes Ende (141) und ein zweites Ende (142) aufweist, die Nabe (13) mit dem Mast (12) verbunden ist und um eine Achse (A1) des Mastes (12) drehbar ist, jedes Rotorblatt (14) über ein erstes Ende (141) mit der Nabe (13) verbunden ist, jedes Rotorblatt (14) um mindestens eine Drehachse des Rotorblatts (14) drehbar ist, und das zweite Ende (142) eines Rotorblatts (14) bei einer Drehung der Nabe (13) um die Achse (A1) eine Bahn beschreibt, die nahe einer als Scheibenebene (TPP) bezeichneten Mittelebene verläuft, wobei das Verfahren den folgenden Schritt umfasst:

- direktes Messen der zeitlichen Entwicklung einer Winkelgeschwindigkeitskomponente ($\omega(t)$) eines der Rotorblätter (14) um eine Anstellwinkelachse der mindestens einen Gelenkachse in Bezug auf ein Inertialbezugssystem,

**dadurch gekennzeichnet, dass** das Verfahren die folgenden weiteren Schritte umfasst:

- Ermitteln eines Zustands des Rotors (11) durch Verarbeiten der Komponente, wobei der Zustand des Rotors umfasst:

einen zyklischen Longitudinal-Anstellwinkel ($\theta_{1S/TPP}$) und einen zyklischen Lateral-Anstellwinkel ($\theta_{1C/TPP}$) des Rotorblatts in Bezug auf die Scheibenebene (TPP), die ermittelt werden durch Extraktion unter Ausnutzung einer Komponente der Winkelgeschwindigkeit ($\omega(t)$) und einer Winkelgeschwindigkeit ($\Omega$) des Rotors um die Achse (A1) und durch Erfassung eines synchronen Signals des Durchgangs eines Rotorblatts (14) gegenüber einer festen, mit dem Rumpf verbundenen Markierung, einer Amplitude und einer Phase der sinusförmigen Grundkomponente der Winkelgeschwindigkeit (w(t)) des Rotorblatts um die Gelenkachse, wobei die sinusförmige Grundkomponente durch ihre Frequenz gekennzeichnet ist, die gleich der Drehfrequenz der Nabe des Rotors um die Achse (A1) ist, wobei der Zustand des Rotors außerdem umfasst:

- einen Kegelwinkel ($\beta_0$) des Rotorblatts in Bezug auf die Scheibenebene (TPP),
- Longitudinal- und Lateral-Neigungswinkel ($\beta_{1C}$ und $\beta_{1S}$) der Scheibenebene (TPP) in Bezug auf eine zur Achse (A1) senkrechte Nabenebene (HP),

wobei das Verfahren als zusätzliche Schritte umfasst:

- Messen eines zyklischen Longitudinal-Anstellwinkels ($\theta_{1S/HP}$) und eines zyklischen Lateral-Anstellwinkels ($\theta_{1C/HP}$) des Rotorblatts (14) in Bezug auf die Nabenebene (HP), wobei der zyklische Longitudinal-Anstellwinkel und der zyklische Lateral-Anstellwinkel des Rotorblatts (14) an einem nicht drehenden Teil einer Taumelscheibe, die die kollektiven und zyklischen Blattverstellungen des Blattes (14) steuert, an den Servomechanismen, die den nicht drehenden Teil der Taumelscheibe betätigen, oder an einer Vorrichtung zur Steuerung von kollektivem und zyklischem Anstellwinkel des Rotorblatts (14) gemessen werden, und
- Berechnen des Longitudinal- und Lateral-Neigungswinkels ($\beta_{1C}$ und $\beta_{1S}$) der Scheibenebene (TPP) in Bezug auf die Nabenebene (HP), wobei die Neigungswinkel ($\beta_{1C}$ und $\beta_{1S}$) der Scheibenebene (TPP) abhängig sind vom Longitudinal- und Lateralanstellwinkel ($\theta_{1S/HP}$) und ($\theta_{1C/HP}$) des Rotorblatts (14), gemessen in Bezug auf die Nabenebene (HP), und den besagten Schätzungen des zyklischen Longitudinal-Anstellwinkels ($\theta_{1S/TPP}$) und des Lateral-Anstellwinkels ($\theta_{1C/TPP}$) des Rotorblatts (14) in Bezug auf die Scheibenebene (TPP).

2. Verfahren nach Anspruch 1,
**dadurch gekennzeichnet, dass** in dem Schritt des Ermittelns eines Zustands des Rotors (11) die Verarbeitung eine harmonische Analyse der Winkelgeschwindigkeitskomponente ($\omega(t)$) ist.

3. Verfahren nach einem der Ansprüche 1 bis 2,
**dadurch gekennzeichnet, dass** das Verfahren einen Zwischenschritt des Erfassens des Zeitpunkts des Durchgangs einer an dem Rotor (11) angebrachten ersten Markierung (115) gegenüber einer an dem Rumpf (16) angebrachten zweiten Markierung (165) umfasst.

4. Verfahren nach einem der Ansprüche 1 bis 3,
**dadurch gekennzeichnet, dass** das Extrahieren der Amplitude und der Phase der sinusförmigen Grundkomponente der Winkelgeschwindigkeit ($\omega(t)$) des Rotorblatts (14) um die Gelenkachse durch mindestens eines der folgenden Verfahren erfolgt:

- Fourierreihenzerlegung,
- Lösen eines Systems von zwei Gleichungen mit zwei Unbekannten unter Verwendung von Momentanmessungen an zwei verschiedenen Rotorblättern (14),
- Schätzen der beiden Unbekannten eines Gleichungssystems mit dem Kleinste-Quadrate-Verfahren unter Verwendung von Momentanmessungen an mehr als zwei verschiedenen Rotorblättern (14),
- synchrone Demodulation,
- rekursives Kleinste-Quadrate-Verfahren,
- nicht-rekursives Kleinste-Quadrate-Verfahren,
- Kalman-Filterung.

5. Verfahren nach einem der Ansprüche 1 bis 4,
**dadurch gekennzeichnet, dass** der Kegelwinkel ($\beta_0$) des Rotors (11) in Abhängigkeit von der Winkelgeschwindigkeitskomponente ($\omega_\theta(t)$) um seine Anstellwinkelachse und der Winkelgeschwindigkeit ($\Omega$) des Rotors um die Achse (A1) und durch Extraktion eines Mittelwerts der sinusförmigen Grundkomponente der Winkelgeschwindigkeit ($\omega(t)$) des Rotorblatts (14) um die Anstellwinkelachse der mindestens einen Gelenkachse durch mindestens eines der folgenden Verfahren bestimmt wird:

- Fourierreihenzerlegung,
- Lösen eines Systems von drei Gleichungen mit drei Unbekannten unter Verwendung von Momentanmessungen an drei verschiedenen Rotorblättern (14),
- Schätzen der drei Unbekannten eines Gleichungssystems unter Verwendung von Momentanmessungen an mehr als drei verschiedenen Rotorblättern (14) nach dem Kleinste-Quadrate-Verfahren,
- Synchrone Demodulation,
- Rekursives Kleinste-Quadrate-Verfahren,
- Nicht-rekursives Kleinste-Quadrate-Verfahren,

- Kalman-Filterung.

6. Verfahren nach einem der Ansprüche 1 bis 5, **dadurch gekennzeichnet, dass** die Neigungswinkel ($\beta_{1C}$, $\beta_1 S$) der Scheibenebene (TPP) jeweils gleich Differenzen zwischen den zyklischen Longitudinal- ($\theta_{1S/HP}$) und Lateral-Anstellwinkeln ($\theta_{1C/HP}$) des Rotorblatts (14), gemessen in Bezug auf die Nabenebene (HP), und den Schätzwerten der zyklischen Longitudinal- ($\theta_{1S/TPP}$) und Lateral-Anstellwinkel ($\theta_{1C/TPP}$) des Rotorblatts (14), gemessen in Bezug auf die Scheibenebene (TPP), oder gleich einer Abweichung zwischen einem Korrekturterm zwischen den zyklischen Longitudinal- ($\theta_{1S/HP}$) und Lateral-Anstellwinkeln ($\theta_{1C/HP}$) des Rotorblatts (14) in Bezug auf die Nabenebene (HP) und den Schätzwerten der zyklischen Longitudinal- ($\theta_{1S/TPP}$) und Lateral-Anstellwinkel ($\theta_{1C/TPP}$) des Rotorblatts (14) in Bezug auf die Scheibenebene (TPP) unter Berücksichtigung eines Anstellwinkel-Schlag-Kopplungskoeffizienten des Rotors (11) sind.

7. Verfahren nach einem der Ansprüche 1 bis 6,
   **dadurch gekennzeichnet, dass** das Verfahren einen Schritt des Berechnens eines Biegemoments des Mastes (12) des Rotors (11) in Abhängigkeit von den Longitudinal- und Lateral-Neigungswinkeln ($\beta_{1C}$) und ($\beta_{1S}$) umfasst.

8. Verfahren nach einem der Ansprüche 1 bis 6,
   **dadurch gekennzeichnet, dass** das Verfahren einen Schritt des Durchführens eines unterstützten oder automatischen Starts des Drehflüglers (10) umfasst, in dem die Scheibenebene (TPP) gemäß einer vorgegebenen Neigungsvorgabe in Bezug auf eine horizontale Ebene geregelt wird.

9. Verfahren nach Anspruch 8,
   **dadurch gekennzeichnet, dass** während des Schritts des Durchführens eines unterstützten oder automatischen Starts des Drehflüglers (10) ein Pilot des Drehflüglers (10) ausschließlich auf einen Steuerhebel für den kollektiven Anstellwinkel der Blätter (14) des Rotors (11) einwirkt, wobei die zyklischen Anstellwinkel der Blätter (14) des Rotors (11) automatisch gesteuert werden, um Longitudinal- und Lateral-Neigungswinkel der Scheibenebene (TPP) in Bezug auf eine horizontale Ebene unabhängig von der Neigung des Geländes und unabhängig vom Wind, dem der Drehflügler (10) ausgesetzt ist, zu regeln.

10. Verfahren nach Anspruch 7,
    **dadurch gekennzeichnet, dass** das Verfahren umfasst:

    - einen Schritt des Schätzens einer von dem Rotor (11) erzeugten aerodynamischen Kraft in Abhängigkeit von dem Kegelwinkel ($\beta o$),
    - einen Schritt des Schätzens des scheinbaren Gewichts des Drehflüglers (10) in Abhängigkeit von der von dem Rotor (11) erzeugten aerodynamischen Kraft, und
    - einen Schritt des Schätzens einer aktuellen Masse des Drehflüglers (10) in Abhängigkeit von der durch den Rotor (11) erzeugten aerodynamischen Kraft und dem scheinbaren Gewicht des Drehflüglers (10).

11. Vorrichtung (1) zum Bestimmen eines Zustands eines Rotors (11) eines Drehflüglers (10), wobei der Drehflügler (10) einen Rumpf (16) und mindestens einen Rotor (11) mit einem Mast (12), einer Nabe (13) und einer Mehrzahl von Rotorblättern (14) aufweist, jedes Rotorblatt (14) ein erstes Ende (141) und ein zweites Ende (142) aufweist, die Nabe (13) mit dem Mast (12) verbunden ist und um eine Achse (A1) des Mastes (11) drehbar ist, jedes Rotorblatt (14) über ein erstes Ende (141) mit der Nabe (13) verbunden ist, jedes Rotorblatt (14) um eine Drehachse des Rotorblatts (14) drehbar ist, und das zweite Ende (142) eines Rotorblatts (14) bei einer Drehung um die Achse (A1) eine Bahn nahe einer als Scheibenebene (TPP) bezeichneten Mittelebene beschreibt,

    **dadurch gekennzeichnet, dass** die Vorrichtung (1) zur Durchführung des Verfahrens nach einem der Ansprüche 1 bis 10 ausgebildet ist, und dass die Vorrichtung (1) umfasst:

    - mindestens einen Rechner (2) mit mindestens einem Speicher (3),
    - einen Impulsdetektor (5), der die Durchgangszeiten einer an dem Rotor (11) angebrachten ersten Markierung (115) gegenüber einer an dem Rumpf (16) angebrachten zweiten Markierung (165) misst, damit der Rechner (2) das synchrone Signal des Durchgangs eines Rotorblatts (14) gegenüber der festen Markierung und die Winkelgeschwindigkeit ($\Omega$) jedes Rotorblatts (14) um die Achse (A1) bestimmt;
    - einen Sensor (4), der eine zeitliche Änderung einer Winkelgeschwindigkeitskomponente ($\omega(t)$) eines Rotorblatts (14) um die Gelenkachse in Bezug auf ein Inertialbezugssystem misst,
    - einen Sensor (7) zum Messen eines zyklischen Longitudinal-Anstellwinkels und eines zyklischen Lateral-Anstellwinkels des Rotorblatts (14) in Bezug auf eine zur Achse (A1) senkrechte Nabenebene (HP) der Nabe (13),
- eine Autopilotvorrichtung des Drehflüglers (10) und

dass der mindestens eine Rechner (2) den Zustand des Rotors (11) bestimmt.

12. Vorrichtung (1) nach Anspruch 11,
**dadurch gekennzeichnet, dass** der Sensor (4) ein in einem Rotorblatt (14) angeordneter Gyrometer ist, wobei eine Empfindlichkeitsachse des Gyrometers bei Verwendung an dem Rotor (11) parallel zu der Gelenkachse des Rotorblatts (14) ausgerichtet ist, um die Winkelgeschwindigkeitskomponente ($\omega(t)$) des Rotorblatts (14) um die Gelenkachse zu messen.

13. Vorrichtung (1) nach Anspruch 11,
**dadurch gekennzeichnet, dass** der Rotor (11) sphärische Anschläge (17) aufweist, wobei ein sphärischer Anschlag (17) ein Rotorblatt (14) mit der Nabe (13) verbindet, der Sensor (4) einen Beschleunigungsmesser, dessen Empfindlichkeitsachse bei Verwendung an dem Rotor (11) parallel zu einer Schlagachse (A3) des Rotorblatts (14) ausgerichtet ist, und einen oder mehrere in einem Rotorblatt (14) angeordnete Gyrometer aufweist, deren Empfindlichkeitsachsen jeweils parallel zu einer Anstellwinkelachse (A2), zur Schlagachse (A3) und zu einer Schleppachse (A4) des Rotorblatts (14) ausgerichtet sind, um einen Ablenkungswinkel jedes sphärischen Anschlags (17) zu schätzen, um die mechanischen Belastungen zu bestimmen, denen der sphärische Anschlag (17) ausgesetzt ist, eine Beschädigung des sphärischen Anschlags (17) vorherzusagen und die Kosten für die Wartung der sphärischen Anschläge (17) zu verringern.

**Claims**

1. **Method** for determining a state of a rotor (11) of a rotorcraft (10),

   said rotorcraft (10) comprising a fuselage (16) and at least one rotor (11) provided with a mast (12), a hub (13) and a plurality of vanes (14), each vane (14) comprising a first end (141) and a second end (142), said hub (13) being connected to said mast (12) and rotating about an axis (A1) of said mast (12), each vane (14) being connected by a first end (141) to said hub (13), each vane (14) being rotatably movable about at least one articulation axis of said vane (14), said second end (142) of a vane (14) describing, during a rotation of said hub (13) about said axis (A1), a neighbouring trajectory of a mean plane called plane of the disc (TPP),
   said method comprising the following step:

   - direct measuring of the development over time of an angular speed component ($\omega(t)$) of one of the vanes (14) about a pitch axis of said at least one articulation axis with respect to an inertial system, and **characterised in that** the method comprises the additional steps:
   - determining a state of said rotor (11) by treatment of said component, said state of the rotor comprising:

   > a longitudinal cyclic pitch ($\theta_{1S/TPP}$) and a lateral cyclic pitch ($\theta_{1C/TPP}$) of said vane with respect to said plane of the disc (TPP) determined by extraction, achieved by utilisation of an angular speed component ($\omega(t)$) and of an angular speed ($\Omega$) of the rotor about the axis (A1) and of an acquisition of a synchronous signal of the passage of a vane (14) facing a fixed system integral with the fuselage, of an amplitude and of a phase of the fundamental sinusoidal component of said angular speed ($\omega(t)$) of said vane about said articulation axis, said fundamental sinusoidal component being **characterised by** its frequency equal to that of the rotation of said hub of said rotor about said axis (A1),

   said state of the rotor also comprising:

   - a cone angle ($\beta_o$) of said vane with respect to said plane of the disc (TPP),
   - longitudinal and lateral tilt angles ($\beta_{1c}$ and $\beta_{1s}$) of said plane of the disc (TPP) with respect to a plane (HP) of said hub perpendicular to said axis (A1),

   said method comprising additional steps:

   - measuring a longitudinal cyclic pitch ($\theta_{1S/HP}$) and a lateral cyclic pitch ($\theta_{1C/HP}$) of said vane (14) with respect to said hub plane (HP), said longitudinal cyclic pitch and said lateral cyclic pitch of said vane (14) being measured at a non-rotating part of a cyclic plate controlling the collective and cyclic pitch variations of said vane (14), at the servomechanisms actuating the non-rotating part of said cyclic plate or at a control device of said collective and cyclic pitches of said vane (14), and

- calculating longitudinal and lateral tilt angles ($\beta_{1C}$ and $\beta_{1S}$) of said plane of the disc (TPP) with respect to said hub plane (HP), said tilt angles ($\beta_{1c}$ and $\beta_{1S}$) of said plane of the disc (TPP) being a function of said longitudinal ($\theta_{1S/HP}$) and lateral ($\theta_{1C/HP}$) cyclic pitches of said vane (14) measured with respect to said hub plane (HP) and of said estimations of the longitudinal ($\theta_{1S/TPP}$) and lateral ($\theta_{1C/TPP}$) cyclic pitches of said vane (14) with respect to said plane of the disc (TPP).

2.  Method according to claim 1,
    **characterised in that** during said step of determining a state of said rotor (11), said treatment is a harmonic analysis of said angular speed component ($\omega(t)$).

3.  Method according to any one of claims 1 to 2,
    **characterised in that** said method comprises an intermediate step of detecting the passage moment of a first system (115) attached to said rotor (11) opposite a second system (165) attached to said fuselage (16).

4.  Method according to any one of claims 1 to 3,
    **characterised in that** said extraction of said amplitude and of said phase of said fundamental sinusoidal component of said angular speed ($\omega(t)$) of said vane (14) about said articulation axis is achieved by at least any one of the following methods:

    - breaking down into Fourier series,
    - resolving a system of two equations to two unknowns utilising the instantaneous measurements on two distinct vanes (14),
    - estimating, by the method of least squares, the two unknowns of an equation system utilising the instantaneous measurements on more than two distinct vanes (14),
    - synchronous demodulation,
    - method of recursive least squares,
    - method of non-recursive least squares,
    - Kalman filtering.

5.  Method according to any one of claims 1 to 4,

    **characterised in that** said cone angle ($\beta_0$) of said rotor (11) is determined according to the angular speed component ($\omega_\theta(t)$) about its pitch axis and said angular speed ($\Omega$) of the rotor about the axis (A1),
    and by extraction of a mean value of the fundamental sinusoidal component of said angular speed ($\omega(t)$) of said vane (14) about the pitch axis of said at least one articulation axis by at least one of any of the following methods:

    - breaking down into Fourier series,
    - resolving a system of three equations to three unknowns utilising the instantaneous measurements on three distinct vanes (14),
    - estimating, by the method of least squares, the three unknowns of an equation system utilising the instantaneous measurements on more than three distinct vanes (14),
    - synchronous demodulation,
    - method of recursive least squares,
    - method of non-recursive least squares,
    - Kalman filtering.

6.  Method according to any one of claims 1 to 5,
    **characterised in that** said tilt angles ($\beta_{1c}$, $\beta_{1S}$) of said plane of the disc (TPP) are equal respectively to differences between said longitudinal ($\theta_{1S/HP}$) and lateral ($\theta_{1C/HP}$) cyclic pitches of said vane (14) measured with respect to said hub plane (HP) and said estimations of the longitudinal ($\theta_{1S/TPP}$) and lateral ($\theta_{1C/TPP}$) cyclic pitches of said vane (14) with respect to said plane of the disc (TPP) or equal respectively to a difference between a corrective term between said longitudinal ($\theta_{1S/HP}$) and lateral ($\theta_{1C/HP}$) cyclic pitches of said vane (14) measured with respect to said hub plane (HP) and said estimations of the longitudinal ($\theta_{1S/TPP}$) and lateral ($\theta_{1C/TPP}$) cyclic pitches of said vane (14) with respect to said plane of the disc (TPP) by considering a pitch/stroke coupling coefficient of said rotor (11).

7.  Method according to any one of claims 1 to 6,
    **characterised in that** said method comprises a step of calculating a bending moment of said mast (12) of said rotor (11) according to said longitudinal and lateral tilt angles ($\beta_{1C}$) and ($\beta_{1S}$).

8.  Method according to any one of claims 1 to 6,
    **characterised in that** said method comprises a step of performing an assisted or automatic take-off of said rotorcraft (10) by enslaving said plane of the disc (TPP) according to a predetermined tilt setpoint with respect to a horizontal plane.

9.  Method according to claim 8,
    **characterised in that** during said step of performing an assisted or automatic take-off of said rotorcraft (10), a pilot of said rotorcraft (10) acts only on a control lever of the collective pitch of said vanes (14) of said rotor (11), said cyclic pitches of said vanes (14) of said rotor (11) being automatically piloted in order to enslave said longitudinal and lateral tilt angles of said plane of the disc (TPP) with respect to a horizontal plane, whatever the gradient of the land, and whatever the wind subjected to by said rotorcraft (10).

10. Method according to claim 7,
    **characterised in that** said method comprises:

    - a step of estimating an aerodynamic force generated by said rotor (11) according to said cone angle ($\beta_0$),
    - a step of estimating the apparent weight of said rotorcraft (10) according to said aerodynamic force generated by said rotor (11), and
    - a step of estimating a current mass of said rotorcraft (10) according to said aerodynamic force generated by said rotor (11) and said apparent weight of said rotorcraft (10).

11. Device (1) for determining a state of a rotor (11) of a rotorcraft (10), said rotorcraft (10) comprising a fuselage (16) and at least one rotor (11) provided with a mast (12), a hub (13) and a plurality of vanes (14), each vane (14) comprising a first end (141) and a second end (142), said hub (13) being connected to said mast (12) and rotating about an axis (A1) of said mast (11), each vane (14) being connected by a first end (141) to said hub (13), each vane (14) being rotatably movable about an articulation axis of said vane (14), said second end (142) of a vane (14) describing, during a rotation about said axis (A1), a neighbouring trajectory of a mean plane called plane of the disc (TPP),

    **characterised in that** said device (1) is configured to implement the method according to any one of claims 1 to 10, said device (1) comprising:

    - at least one computer (2) having at least one memory (3),
    - a pulse detector (5) measuring passage moments of a first system (115) attached to said rotor (11) opposite a second system (165) attached to said fuselage (16), such that said computer (2) determines said synchronous signal of the passage of a vane (14) facing said fixed system and said angular speed ($\Omega$) of each vane (14) about said axis (A1);
    - a sensor (4) measuring a development over time of an angular speed component ($\omega(t)$) of a vane (14) about said articulation axis with respect to an inertial system,
    - a sensor (7) for measuring a longitudinal cyclic pitch and a lateral cyclic pitch of said vane (14) with respect to a hub plane (HP) of said hub (13) perpendicular to said axis (A1),
    - an automatic pilot of said rotorcraft (10), and

    **in that** said at least one computer (2) determining said state of said rotor (11).

12. Device (1) according to claim 11,
    **characterised in that** said sensor (4) is a gyro arranged in a vane (14), a sensitivity axis of said gyro being oriented, during a use on said rotor (11), parallel to said articulation axis of said vane (14) in order to measure said angular speed component ($\omega(t)$) of said vane (14) about said articulation axis.

13. Device (1) according to claim 11,
    **characterised in that**, said rotor (11) comprising spherical abutments (17), a spherical abutment (17) connecting a vane (14) to said hub (13), said sensor (4) comprises an accelerometer, the sensitivity axis of which is oriented, during a use on said rotor (11), parallel to a stroke axis (A3) of the vane (14) and one or more gyros arranged in a vane (14), the sensitivity axes of which are oriented respectively parallel to a pitch axis (A2), to the stroke axis (A3) and to a drag axis (A4) of said vane (14) in order to estimate a fleet angle of each spherical abutment (17), so as to determine mechanical urges subjected to by the spherical abutment (17), to predict a damaging of said spherical abutment (17), and to decrease the costs of maintaining said spherical abutments (17).

Fig.1

Fig.2

Fig.3

Fig.4

Fig.5

Fig.6

Fig.7

Fig.8

Fig.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9758258 B
- WO 2018081802 A
- FR 2282644
- FR 2565270
- US 2015210382 A
- EP 2433866 A
- EP 3025958 A
- FR 2961306
- EP 3201084 A